(19) Europäisches Patentamt / European Patent Office / Office européen des brevets

(11) **EP 4 679 906 A1**

(12) **EUROPEAN PATENT APPLICATION**
published in accordance with Art. 153(4) EPC

(43) Date of publication:
**14.01.2026  Bulletin 2026/03**

(21) Application number: **23925789.2**

(22) Date of filing: **09.03.2023**

(51) International Patent Classification (IPC):
**H04W 72/04** $^{(2023.01)}$

(52) Cooperative Patent Classification (CPC):
**H04W 72/04**

(86) International application number:
**PCT/CN2023/080578**

(87) International publication number:
**WO 2024/183072 (12.09.2024 Gazette 2024/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Guangdong OPPO Mobile Telecommunications Corp., Ltd.**
**Wusha, Chang'an, Dongguan 523860 (CN)**

(72) Inventors:
• **ZHAO, Zhenshan**
  **Dongguan, Guangdong 523860 (CN)**
• **ZHANG, Shichang**
  **Dongguan, Guangdong 523860 (CN)**
• **DING, Yi**
  **Dongguan, Guangdong 523860 (CN)**

(74) Representative: **Mewburn Ellis LLP**
**Aurora Building**
**Counterslip**
**Bristol BS1 6BX (GB)**

(54) **WIRELESS COMMUNICATION METHOD AND DEVICE**

(57)  Embodiments of the present application provide a wireless communication method and a device, and involve designing a time slot structure (equivalent to a first time unit) based on M time slots, so as to transmit an S-SSB, thereby optimizing an S-SSB transmission solution. The wireless communication method comprises: a first terminal sending an S-SSB on a time domain symbol located in a first time unit and used for transmitting an S-SSB; wherein the first time unit comprises M time slots, and within the first time unit, the first time domain symbol available for transmitting an S-SSB being at an A+1 time domain symbol, and within the first time unit, the endmost B time domain symbols being used as protection symbols, where M, A and B are all positive integers, and $M \geq 1$, $A > 1$, and $B > 1$; and wherein the S-SSB transmitted in the first time unit comprises an S-PSS, an S-SSS and a PSBCH.

**200**

First terminal

Second terminal

S210, a first terminal transmits an S-SSB on time domain symbols available for transmitting the S-SSB in a first time unit; where the first time unit includes M slots, a first time domain symbol available for transmitting the S-SSB in the first time unit is an (A+1)-th time domain symbol, last B time domain symbols in the first time unit are used as guard symbols, M, A and B are all positive integers, $M \geq 1$, $A > 1$, $B > 1$, and the S-SSB transmitted in the first time unit includes an S-PSS, an S-SSS and a PSBCH

S220, a second terminal receives the S-SSB transmitted by the first terminal on the time domain symbols available for transmitting the S-SSB in the first time unit

FIG. 15

Processed by Luminess, 75001 PARIS (FR)

**Description**

<u>**TECHNICAL FIELD**</u>

Embodiments of the present application relate to the field of communications, and more specifically, to a wireless communication method and a device.

<u>**BACKGROUND**</u>

In order to improve a transmission rate of a sidelink communication system, a millimeter wave frequency band may be used in the sidelink transmission system, e.g., a frequency band higher than 52.6 GHz. Subcarrier spacings supported in different frequency ranges are different. For example, frequency range (FR)1 (410 MHz - 7.125 GHz) supports subcarrier spacings of 15 kHz, 30 kHz and 60 kHz, FR2 (24.25 GHz - 52.6 GHz) supports subcarrier spacings of 60 kHz and 120 kHz, and FRX (52.6 GHz - 71 GHz) supports subcarrier spacings of 120 kHz, 480 kHz and 960 kHz. For the subcarrier spacing of 480 kHz or 960 kHz, duration of one orthogonal frequency-division multiplexing (OFDM) symbol becomes shorter. In this case, how to design a slot structure of a sidelink synchronization signal block (S-SSB) becomes a problem that needs to be solved.

<u>**SUMMARY**</u>

The embodiments of the present application provide a wireless communication method and a device, and design a slot structure based on M slots (i.e., a first time unit) to transmit an S-SSB, thereby optimizing a scheme of S-SSB transmission.

In a first aspect, a wireless communication method is provided, the method includes:

transmitting, by a first terminal, an S-SSB on time domain symbols available for transmitting the S-SSB in a first time unit;

where the first time unit includes M slots, a first time domain symbol available for transmitting the S-SSB in the first time unit is an (A+1)-th time domain symbol, and last B time domain symbols in the first time unit are used as guard symbols, where M, A and B are all positive integers, and M≥1, A> 1, B>1; and

the S-SSB transmitted in the first time unit includes a sidelink primary synchronization signal (S-PSS), a sidelink secondary synchronization signal (S-SSS) and a physical sidelink broadcast channel (PSBCH).

In a second aspect, a wireless communication method is provided, and the method includes:

receiving, by a second terminal, an S-SSB transmitted by a first terminal on time domain symbols available for transmitting the S-SSB in a first time unit;

where the first time unit includes M slots, a first time domain symbol available for transmitting the S-SSB in the first time unit is an (A+1)-th time domain symbol, and last B time domain symbols in the first time unit are used as guard symbols, where M, A and B are all positive integers, and M≥1, A>1, B>1; and

the S-SSB transmitted in the first time unit includes an S-PSS, an S-SSS and a PSBCH.

In a third aspect, a terminal device is provided, which is a first terminal. The terminal device is configured to perform the method in the first aspect. Specifically, the terminal device includes a functional module for performing the method in the first aspect.

In a fourth aspect, a terminal device is provided, which is a second terminal. The terminal device is configured to perform the method in the second aspect. Specifically, the terminal device includes a functional module for performing the method in the second aspect.

In a fifth aspect, a terminal device is provided, which is a first terminal. The terminal device includes a processor and a memory. The memory is configured to store a computer program, and the processor is configured to call and run the computer program stored in the memory, to cause the terminal device to perform the method in the first aspect.

In a sixth aspect, a terminal device is provided, which is a second terminal. The terminal device includes a processor and a memory. The memory is configured to store a computer program, and the processor is configured to call and run the computer program stored in the memory, to cause the terminal device to perform the method in the second aspect.

In a seventh aspect, an apparatus is provided for implementing the method in any one of the first aspect and the second aspect.

Specifically, the apparatus includes a processor, configured to call a computer program from a memory and run the computer program, to cause a device equipped with the apparatus to perform the method in any one of the first aspect and the second aspect.

In an eighth aspect, a computer-readable storage medium is provided for storing a computer program. The computer program causes a computer to perform the method in any one of the first aspect and the second aspect.

In a ninth aspect, a computer program product is provided, including computer program instructions. The computer program instructions cause a computer to perform the method in any one of the first aspect and the second aspect.

In a tenth aspect, a computer program is provided, which, when executed on a computer, causes a computer to perform the method in any one of the first aspect and the second aspect.

Through the above technical solutions, the slot structure based on M slots (i.e., the first time unit) is designed to transmit the S-SSB, thereby optimizing the scheme of S-SSB transmission.

## BRIEF DESCRIPTION OF THE DRAWINGS

FIG. 1 is a schematic diagram of an architecture of a communication system provided by the present application.
FIG. 2 is a schematic diagram of an architecture of another communication system provided by the present application.
FIG. 3 is a schematic diagram of sidelink communication within network coverage provided by the present application.
FIG. 4 is a schematic diagram of sidelink communication with partial network coverage provided by the present application.
FIG. 5 is a schematic diagram of sidelink communication outside network coverage provided by the present application.
FIG. 6 is a schematic diagram of sidelink communication with a central control node provided by the present application.
FIG. 7 is a schematic diagram of a unicast sidelink communication provided by the present application.
FIG. 8 is a schematic diagram of a multicast sidelink communication provided by the present application.
FIG. 9 is a schematic diagram of a broadcast sidelink communication provided by the present application.
FIG. 10 is a schematic diagram of a slot structure in an NR SL provided by the present application.
FIG. 11 is a schematic diagram of time-frequency domain positions of S-SS symbols and PSBCH symbols in a slot in an NR SL provided by the present application.
FIG. 12 is a schematic diagram of an SSB structure in an NR system provided by the present application.
FIG. 13 is schematic diagrams of a system without an analog beam and a system with analog beams provided by the present application.
FIG. 14 is a schematic diagram of a TCI state configuration method for a PDSCH provided by the present application.
FIG. 15 is a schematic flowchart of a wireless communication method provided according to embodiments of the present application.
FIGS. 16 to 26 are schematic diagrams of a first time unit provided by embodiments of the present application.
FIG. 27 is a schematic block diagram of a terminal device provided by embodiments of the present application.
FIG. 28 is a schematic block diagram of another terminal device provided by embodiments of the present application.
FIG. 29 is a schematic block diagram of a communication device provided by embodiments of the present application.
FIG. 30 is a schematic block diagram of an apparatus provided by embodiments of the present application.
FIG. 31 is a schematic block diagram of a communication system provided by embodiments of the present application.

## DETAILED DESCRIPTION

Technical solutions in embodiments of the present application will be described below in conjunction with drawings in the embodiments of the present application. Obviously, the described embodiments are only part of the embodiments of the present application, rather than all of the embodiments. With respect to the embodiments in the present application, all other embodiments obtained by ordinary technicians in the art without making any creative work shall fall within the scope of protection of the present application.

The technical solutions in the embodiments of the present application may be applied to various communication systems, such as a global system of mobile communication (GSM), a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial networks (NTN) system, a universal mobile telecommunication system (UMTS), a wireless local area network (WLAN), wireless fidelity (Wi-Fi), a 5th-generation (5G) system, or other communication systems.

Generally speaking, a conventional communication system supports a limited number of connections and is easy to implement. However, with the development of communication technologies, the mobile communication system supports not only the conventional communication, but also device to device (D2D) communication, machine to machine (M2M) communication, machine type communication (MTC), vehicle to vehicle (V2V) communication, or vehicle to everything (V2X) communication, etc. The embodiments of the present application may also be applied to these communication systems.

A communication system in the embodiments of the present application may be applied to a carrier aggregation (CA) scenario, a dual connectivity (DC) scenario, or a standalone (SA) networking scenario.

In some embodiments, the communication system in the embodiments of the present application may be applied to an unlicensed spectrum, where the unlicensed spectrum may also be considered as a shared spectrum; or, the communication system in the embodiments of the present application may also be applied to a licensed spectrum, where the licensed spectrum may also be considered as an unshared spectrum.

In some embodiments, the communication system in the embodiments of the present application may be applied to FR1 frequency band (corresponding to a frequency range of 410 MHz to 7.125 GHz), FR2 frequency band (corresponding to a frequency range of 24.25 GHz to 52.6 GHz), and new frequency bands such as FRX (corresponding to a frequency range of 52.6 GHz to 71 GHz) or a high-frequency band corresponding to a frequency range of 71 GHz to 114.25 GHz.

The embodiments of the present application describe various embodiments in conjunction with a network device and a terminal device. The terminal device may also be referred to as a user equipment (UE), an access terminal, a user unit, a user station, a mobile station, a mobile platform, a remote station, a remote terminal, a mobile device, a user terminal, a terminal, a wireless communication device, a user agent or a user device, etc.

The terminal device may be a station (ST) in the WLAN, which may be a cellular phone, a cordless phone, a session initiation protocol (SIP) phone, a wireless local loop (WLL) station, a personal digital assistant (PDA) device, a handheld device with a wireless communication function, a computing device or other processing devices connected to a wireless modem, an in-vehicle device, a wearable device, a terminal device in a next-generation communication system (e.g., an NR network), a terminal device in a future evolved public land mobile network (PLMN) network, or the like.

In the embodiments of the present application, the terminal device may be deployed on land, including indoors or outdoors, in forms such as handheld, wearable, or in-vehicle; or the terminal device may be deployed on water (e.g., a steamship); or the terminal device may be deployed in air (e.g., an airplane, a balloon, or a satellite).

In the embodiments of the present application, the terminal device may be a mobile phone, a pad, a computer with a wireless transceiver function, a virtual reality (VR) terminal device, an augmented reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, a wireless terminal device in smart home, or the like.

By way of example and not limitation, in the embodiments of the present application, the terminal device may also be a wearable device. The wearable device, which is also referred to as a wearable smart device, is a generic term for devices capable of being worn, into which the daily wear is intelligently designed and developed by applying wearable technologies, such as glasses, gloves, watches, clothing, and shoes. The wearable device is a portable device that is worn directly on the body, or integrated into the user's clothing or accessories. The wearable device is not only a hardware device, but also achieves powerful functions through software supporting, data interaction, and cloud interaction. A generalized wearable smart device includes, for example, a smartwatch or smart glasses, with full functions, large size, and entire or partial functions without relying on a smartphone, as well as, for example, a smart bracelet or smart jewelry for monitoring physical signs, which only focuses on a certain type of application function and needs to be used in conjunction with other devices (such as a smartphone).

In embodiments of the present application, the network device may be a device used for communicating with a mobile device. The network device may be an access point (AP) in the WLAN, a base station (Base Transceiver Station, BTS) in the GSM or CDMA, a base station (NodeB, NB) in the WCDMA, an evolutional base station (Evolutional Node B, eNB or eNodeB) in the LTE, a relay station or an access point, an in-vehicle device, a wearable device, a network device or a base station (gNB) in an NR network, a network device in the future evolved PLMN, a network device in the NTN, or the like.

By way of example and not limitation, in the embodiments of the present application, the network device may have a mobile characteristic. For example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, or a high elliptical orbit (HEO) satellite. Optionally, the network device may be a base station provided on land, water, or other places.

In embodiments of the present application, the network device may provide a service for a cell, and the terminal device communicates with the network device through transmission resources (e.g., frequency domain resources, or frequency spectrum resources) used by the cell. The cell may be a cell corresponding to the network device (e.g., a base station), or belong to a macro base station or a base station corresponding to a small cell. Small cells here may include a metro cell, a micro cell, a pico cell, a femto cell, etc. These small cells have characteristics of small coverage and low transmit power, and are suitable for providing a data transmission service with high speed.

It should be understood that terms "system" and "network" are often used interchangeably herein. The term "and/or" herein is used to describe an association relationship between associated objects, for example, to indicate that there may be three relationships between the related objects. For example, "A and/or B" may represent: A alone, both A and B, and B alone. In addition, the character "/" herein generally indicates that related objects before and after this character are in an "or" relationship.

The terms used in the implementation section of the present application are only used to explain the specific embodiments of the present application and are not intended to limit the present application. The terms "first", "second", "third", "fourth", "A", "B", etc. in the description, claims and drawings of the present application are used to distinguish different objects rather than to describe a specific order. In addition, the terms "includes", "comprises", and "has" and any variations thereof, are intended to cover a non-exclusive inclusion.

It should be understood that the "indicate" mentioned in the embodiments of the present application may mean a direct indication or an indirect indication, or represent that there is an association relationship. For example, A indicating B may mean that A directly indicates B, e.g., that B may be obtained through A; or it may mean that A indirectly indicates B, e.g., that A indicates C, and B may be obtained through C; or it may mean that there is an association relationship between A and B.

The term "correspond" described in the embodiments of the present application may mean a relationship of direct or indirect correspondence between the two, or a relationship of association between the two, or a relationship of indicating and being indicated, or configuring and being configured, or the like.

In the embodiments of the present application, "predefined" or "pre-configured" may be achieved by pre-saving corresponding codes, tables or other methods that may be used to indicate relevant information in a device (for example, including a terminal device and a network device), its specific implementation method is not limited in the present application. For example, predefined may refer to that defined in the protocol.

In the embodiments of the present application, the "protocol" may refer to a standard protocol in the communication field, for example, it may include an LTE protocol, an NR protocol, and related protocols used in future communication systems, which is not limited in the present application.

To facilitate understanding of the technical solutions of the embodiments of the present application, the technical solutions of the present application are described in detail below through specific embodiments. The following related technologies, as optional solutions, may be arbitrarily combined with the technical solutions of the embodiments of the present application, and they all belong to the protection scope of the embodiments of the present application. The embodiments of the present application include at least part of the following contents.

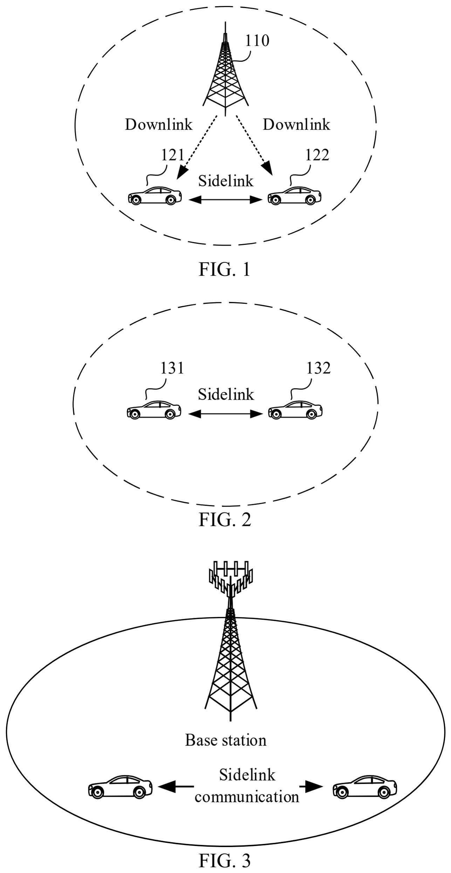

FIG. 1 is a schematic diagram of a communication system applied to the embodiments of the present application. Transmission resources of vehicle terminals (a vehicle terminal 121 and a vehicle terminal 122) are allocated by a base station 110. The vehicle terminals transmit data on a sidelink based on the resources allocated by the base station 110. Specifically, the base station 110 may allocate resources for a single transmission to the terminals, or may allocate resources for a semi-static transmission to the terminals.

FIG. 2 is a schematic diagram of another communication system applied to the embodiments of the present application. Vehicle terminals (a vehicle terminal 131 and a vehicle terminal 132) autonomously select transmission resources from sidelink resources to transmit data. Optionally, the vehicle terminal may select a transmission resource randomly, or select a transmission resource by monitoring.

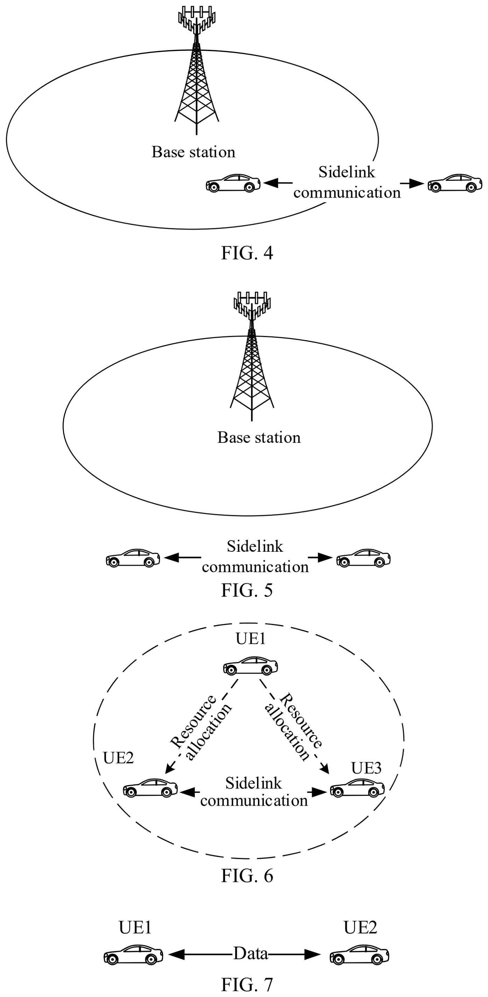

According to network coverage situations of the communication terminals, sidelink communication may be divided into sidelink communication within network coverage, as illustrated in FIG. 3; sidelink communication with partial network coverage, as illustrated in FIG. 4; and sidelink communication outside network coverage, as illustrated in FIG. 5.

In FIG. 3, in the sidelink communication within network coverage, all the terminals performing sidelink communication are located within the coverage of the base station. Thus, the above terminals may perform sidelink communication based on a same sidelink configuration through receiving configuration signaling from the base station.

In FIG. 4, in a case of the sidelink communication with partial network coverage, some of terminals performing sidelink communication are located within the coverage of the base station, these terminals can receive configuration signaling from the base station and perform sidelink communication according to the configuration of the base station. However, terminals outside the network coverage cannot receive the configuration signaling from the base station. In this case, the terminals outside the network coverage determine a sidelink configuration based on pre-configuration information and information carried in a physical sidelink broadcast channel (PSBCH) that is transmitted by the terminals within the network coverage, so as to perform sidelink communication.

In FIG. 5, for sidelink communication outside network coverage, all terminals performing sidelink communication are located outside the network coverage, and all terminals determine a sidelink configuration based on pre-configuration information to perform sidelink communication.

In FIG. 6, for sidelink communication with a central control node, multiple terminals form a communication group. There is a central control node in the communication group, and the central control node may also be called a cluster header (CH) terminal. The central control node has one of the following functions: responsible for establishing a communication group; adding or removing a group member; coordinating resources, allocating sidelink transmission resources to other terminals, receiving sidelink feedback information from other terminals; coordinating resources with other communication groups, or the like.

It should be noted that device-to-device communication is a sidelink (SL) transmission technology based on D2D, which is different from the way in which communication data is received or transmitted by base stations in conventional cellular systems. Therefore, it has higher spectrum efficiency and lower transmission latency. The internet of vehicles system adopts terminal-to-terminal direct communication. Two transmission modes are defined in the 3GPP, which are respectively referred to as a first mode (sidelink resource allocation mode 1) and a second mode (sidelink resource allocation mode 2).

In the first mode, transmission resources for the terminals are allocated by the base station, and the terminals transmit data on the sidelink according to the resources allocated by the base station. The base station may allocate resources for a single transmission to the terminal, or may allocate resources for a semi-static transmission to the terminal. As illustrated in FIG. 3, the terminals are located within the network coverage, and the network allocates transmission resources for sidelink transmission to the terminals.

In the second mode, the terminals select resources from a resource pool to transmit data. As illustrated in FIG. 5, the terminals are located outside the cell coverage, and the terminals autonomously select transmission resources from a pre-configured resource pool to perform sidelink transmission. Alternatively, as illustrated in FIG. 3, the terminals autonomously select transmission resources from a resource pool configured by the network to perform sidelink transmission.

Autonomous driving is supported in new radio - vehicle to everything (NR-V2X), which puts forward higher requirements on data interaction between vehicles, such as higher throughput, lower latency, higher reliability, larger coverage, more flexible resource allocation, and the like.

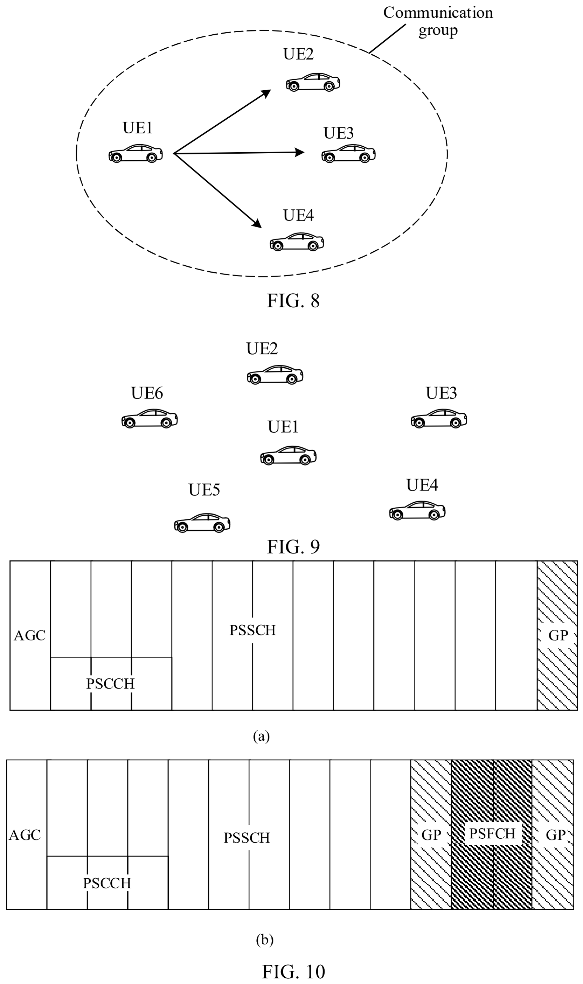

In NR-V2X, unicast, multicast and broadcast transmission modes are supported. For the unicast transmission, there is only one receiver terminal. As illustrated in FIG. 7, the unicast transmission is performed between UE1 and UE2. For the multicast transmission, receiver terminals are all terminals in a communication group, or all terminals within a certain transmission distance. As illustrated in FIG. 8, UE1, UE2, UE3 and UE4 constitute a communication group, in which UE1 transmits data, and other terminal devices in the group are all receiver terminals. For the broadcast transmission, a receiver terminal is any terminal around the transmitting terminal. As illustrated in FIG. 9, UE1 is the transmitting terminal, and other terminals around the UE1 (UE2 to UE6) are all receiver terminals.

To facilitate better understanding of the embodiments of the present application, a frame structure of an NR-based sidelink system (NR SL) related to the present application is described below.

A slot structure in NR SL is illustrated in FIG. 10. (a) in FIG. 10 represents a slot structure that does not include a physical sidelink feedback channel (PSFCH) in a slot; and (b) in FIG. 10 represents a slot structure that includes PSFCH.

A physical sidelink control channel (PSCCH) in NR SL starts from a second sidelink symbol of the slot in a time domain. The PSCCH occupies 2 or 3 orthogonal frequency-division multiplexing (OFDM) symbols, and may occupy {10, 12, 15, 20, 25} physical resource blocks (PRBs) in a frequency domain. In order to reduce complexity of blind detection of the PSCCH by UE, only one number of PSCCH symbols and one number of PRBs are allowed to be configured in one resource pool. In addition, a sub-channel is the minimum granularity of physical sidelink shared channel (PSSCH) resource allocation in NR SL. Therefore, the number of PRBs occupied by the PSCCH must be less than or equal to the number of PRBs contained in one sub-channel in the resource pool, to avoid additional limitations on PSSCH resource selection or allocation. The PSSCH also starts from the second sidelink symbol of the slot in the time domain, a last time domain symbol of the slot is a guard period (GP) symbol, and the remaining symbols are mapped to the PSSCH. The guard period symbol may also be called a guard symbol. A first sidelink symbol of the slot is a repetition of the second sidelink symbol. Usually, the receiver terminal uses the first sidelink symbol as an automatic gain control (AGC) symbol, and data on this symbol is usually not used for data demodulation. The receiver terminal uses a time of this symbol for AGC training or adjustment, and thus this symbol may also be called an AGC symbol. The PSSCH occupies A sub-channels in the frequency domain, and each sub-channel includes B consecutive PRBs, where A and B are positive integers, as illustrated in (a) of FIG. 10.

As illustrated in (b) of FIG. 10, in a case where a PSFCH is included in a slot, a second-to-last symbol and a third-to-last symbol in the slot are used for PSFCH channel transmission. Data on the third-to-last symbol is a repetition of data on the second-to-last symbol, and one time domain symbol before the PSFCH channel is used as a GP symbol.

The sidelink synchronization signal block (S-SSB) block (also known as the S-SS/PSBCH block) in the NR SL includes a sidelink synchronization signal and a PSBCH. The sidelink synchronization signal (S-SS) is divided into a sidelink primary synchronization signal (S-PSS) and a sidelink secondary synchronization signal (S-SSS). The S-PSS occupies the second and third OFDM symbols in the slot, the S-SSS occupies the fourth and fifth OFDM symbols in the slot, the last symbol is the GP (also called the guard symbol), and the remaining symbols are used to transmit the PSBCH. The S-PSS and the S-SSS are consecutive in the time domain, and thus a channel estimation result obtained according to the S-PSS may be applied to S-SSS detection, which is beneficial to improving detection performance of the S-SSS.

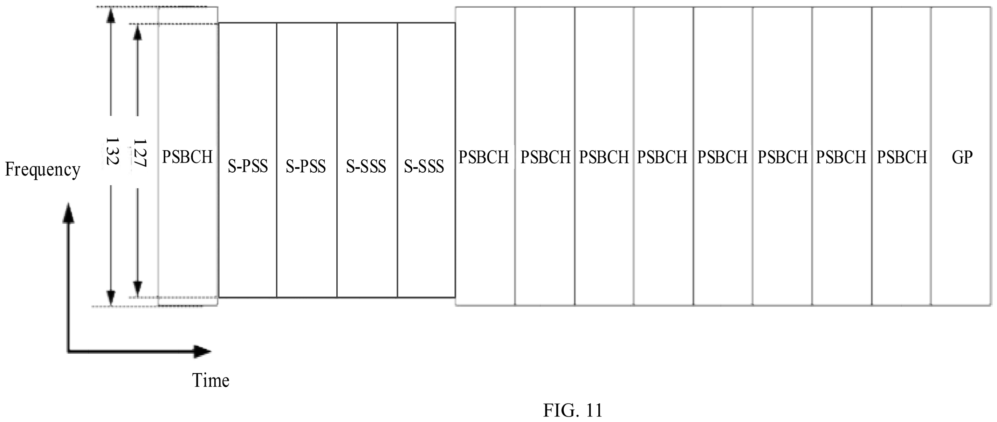

As illustrated in FIG. 11, in the frequency domain, the PSBCH occupies 11 consecutive PRBs (a total of 132 subcarriers), and the length of the S-PSS or the S-SSS is 127 subcarriers. Therefore, in the OFDM symbols where the S-PSS and S-SSS are located, subcarriers #0, #1, #129, #130 and #131 are set to zero. Each PSBCH symbol includes a PSBCH demodulation reference signal (DMRS), and the DMRS is mapped to subcarrier #0, subcarrier #4, and subcarrier #8 in resource blocks (RBs) occupied by the PSBCH.

To facilitate better understanding of the embodiments of the present application, a synchronization signal block (SSB) structure of the NR system related to the present application is described below.

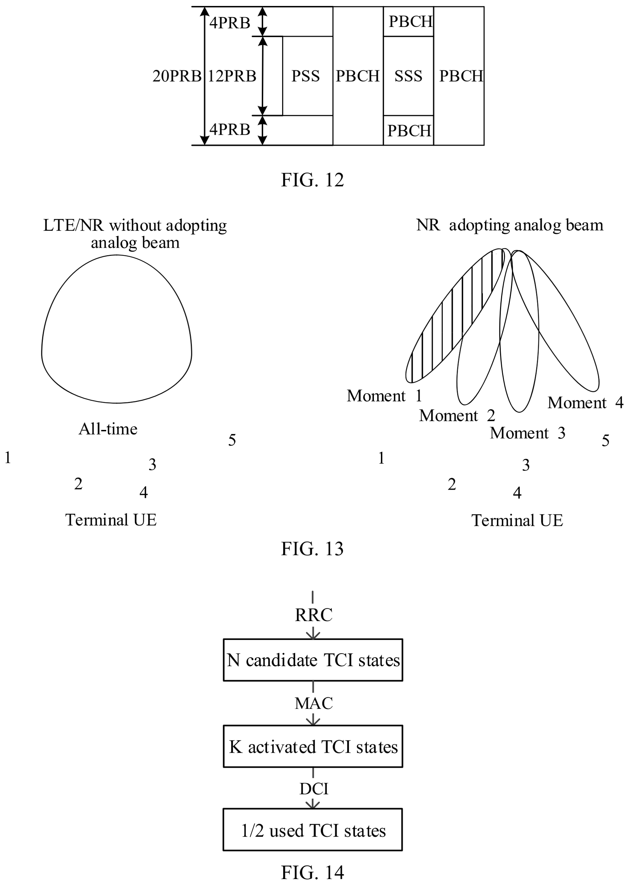

The SSB structure of the NR system (also known as an SS/PBCH block) is illustrated in FIG. 12. One SSB consists of 4 symbols. A first symbol is used to transmit a primary synchronization signal (PSS) with a bandwidth of 12 PRBs. A second symbol and a fourth symbol are used to transmit PBCH with a bandwidth of 20 PRBs. A third symbol is used to transmit the secondary synchronization signal (SSS) with a bandwidth of 12 PRBs, and there are 4 PRBs on each side of the third symbol for transmitting a physical broadcast channel (PBCH). Each symbol including a PBCH includes a PBCH DMRS, and the DMRS is mapped to subcarrier #0, subcarrier #4, and subcarrier #8 in RBs occupied by the PBCH.

To facilitate better understanding of the embodiments of the present application, a multi-beam system related to the present application is described below.

Design goals of the NR/5G system include large-bandwidth communications in high-frequency bands (e.g., frequency bands above 6 GHz). In a case where an operating frequency increases, path loss during transmission will increase, thus affecting a coverage capability of the high-frequency system. In order to effectively ensure the coverage of the high-frequency band of the NR system, an effective technical solution is based on massive antenna arrays (Massive MIMO) to form a beamforming with greater gain, overcome transmission loss and ensure system coverage.

A millimeter-wave antenna array, due to its shorter wavelength, smaller antenna element spacing and aperture, may allow more physical antenna elements to be integrated into a two-dimensional antenna array with a limited size. In this case, due to the limited size of the millimeter-wave antenna array, digital beamforming cannot be used in consideration of factors such as hardware complexity, cost overhead, and power consumption. Instead, analog beamforming is usually used, which may reduce complexity of device implementation while enhancing network coverage.

In a typical 2G/3G/4G system, a cell (sector) uses a wide beam to cover the entire cell. Therefore, at every moment, UEs within the cell coverage have the opportunity to obtain transmission resources allocated by the system.

The multi-beam system in NR/5G covers the entire cell via different beams. That is, each beam covers a smaller area. The effect of multiple beams covering the entire cell is achieved through sweeping in the time.

FIG. 13 is schematic diagrams of a system without beamforming and a system with beamforming. (a) of FIG. 13 is a conventional LTE and NR system without beamforming, and (b) of FIG. 13 is a NR system with beamforming.

In (a) of FIG. 13, in LTE/NR, a network side uses a wide beam to cover the entire cell, and users 1 to 5 may receive network signals at any time.

In contrast, in (b) of FIG. 13, the network side uses narrow beams (e.g., beams 1 to 4 in the figure), and uses different beams at different times to cover different areas in the cell. For example, at moment 1, the NR network side covers an area where user 1 is located through beam 1; at moment 2, the NR network side covers an area where user 2 is located through beam 2; at moment 3, the NR network side covers an area where users 3 and 4 are located through beam 3; at moment 4, the NR network side covers an area where user 5 is located through beam 4.

In (b) of FIG. 13, since the network uses narrow beams, and emission energy may be more concentrated, a longer distance may be covered. In this case, since the beams are narrow, each beam can only cover a part of the cell, analog beamforming is "trading time for space".

Analog beamforming may be applied to not only the network side device but also terminals. In this case, the analog beamforming may be used for transmitting signals (called transmit beams), and receiving signals (called receive beams).

Specifically, different beams are identified by the different signals carried on them. Different SSBs are transmitted on different beams, and the UE may distinguish different beams through different SSBs. Different channel state information reference signals (CSI-RSs) are transmitted on different beams, and the UE identifies different beams through the CSI-RSs /CSI-RS resources.

In a multi-beam system, a physical downlink control channel (PDCCH) and a physical downlink shared channel (PDSCH) may be transmitted through different downlink transmit beams.

For systems below a 6 GHz frequency band, there is generally no analog beam on the UE side. Therefore, an omnidirectional antenna (or a nearly omnidirectional antenna) is used to receive signals transmitted by different downlink transmit beams of the base station.

For millimeter wave systems, there may be analog beams on the UE side, and corresponding downlink receive beams need to be used to receive signals transmitted by corresponding downlink transmit beams. In this case, corresponding beam indication information is required to assist the UE in determining information related to transmit beams of the network side, or information related to the corresponding receive beams of the UE side.

In the NR protocol, the beam indication information does not directly indicate the beam itself, but is indicated through quasi-co-located (QCL) Type D' type ('QCL-Type D' type) between signals. On the UE side, determining to receive a corresponding channel/signal is also based on the QCL assumption.

To facilitate better understandings of the embodiments of the present application, the QCL indication/assumption of downlink transmission related to the present application is described below.

When receiving a signal, in order to improve the receiving performance, the terminal may improve a receiving algorithm by utilizing characteristics of a transmission environment corresponding to data transmission. For example, statistical characteristics of the channel may be used to optimize designs and parameters of a channel estimator. In the NR system, these characteristics corresponding to the data transmission are represented by QCL states (QCL-Info).

If the downlink transmission comes from different transmission reception points (TRP)/panels/beams, the characteristics of the transmission environment corresponding to the data transmission may also change. Therefore, in the NR system, when transmitting the downlink control channel or data channel, the network side will indicate the corresponding QCL state information to the terminal through a transmission configuration indicator (TCI) state.

One TCI state may include the following configurations:

TCI state identity (ID), used to identify one TCI state;
QCL information 1; and
QCL information 2 (optional).

One QCL information includes the following information:

QCL type configuration, which may be one of QCL-TypeA, QCL-TypeB, QCL-TypeC or QCL-TypeD; and
QCL reference signal configuration, which includes a cell ID where the reference signal is located, a BWP ID, and an identity of the reference signal (which may be a CSI-RS resource ID or an SSB index).

If QCL information 1 and QCL information 2 are both configured, a QCL type of at least one QCL information must be one of QCL-TypeA, QCL-TypeB, and QCL-TypeC, and a QCL type of another QCL information (if configured) must be QCL-TypeD.

Definitions of different QCL type configurations are as follows:

'QCL-TypeA': {Doppler shift, Doppler spread, average delay, delay spread};
'QCL-TypeB': {Doppler shift, Doppler spread};
'QCL-TypeC': {Doppler shift, average delay}; and
'QCL-TypeD': {Spatial Rx parameter}.

In the NR system, the network side may indicate the corresponding TCI state for the downlink signal or downlink channel.

The network side configures the QCL reference signal of the target downlink channel or the target downlink signal as a reference SSB or a reference CSI-RS resource through the TCI state, and the QCL type is configured as QCL-TypeA, QCL-TypeB or QCL-TypeC. In this case, the terminal may assume that large-scale parameters of the target downlink signal and the reference SSB or reference CSI-RS resource are the same, and the large-scale parameters are determined through the QCL type configuration.

Similarly, the network side configures the QCL reference signal of the target downlink channel or downlink signal as a reference SSB or reference CSI-RS resource through the TCI state, and the QCL type is configured as QCL-TypeD. In this case, the terminal may use the same receive beam (i.e., Spatial Rx parameter) as that for receiving the reference SSB or reference CSI-RS resource to receive the target downlink signal. Generally, the target downlink channel (or downlink signal) and its reference SSB or reference CSI-RS resource are transmitted by the same TRP or the same panel or the same beam on the network side. If the transmission TRPs or transmission panels or transmit beams of two downlink signals or downlink channels are different, different TCI states are usually configured.

For a downlink control channel, a TCI state of a corresponding control resource set (CORESET) may be indicated via radio resource control (RRC) signaling, or via RRC signaling and MAC signaling.

For the downlink data channel, the available TCI state set is indicated via the RRC signaling, and some of the TCI states are activated via a media access control (MAC) layer signaling. Finally, one or two TCI states, for the PDSCH scheduled by downlink control information (DCI), are indicated from the activated TCI states through the TCI state indication field in the DCI. The case of 2 TCI states is mainly for a scenario similar to multiple TRPs discussed later.

Specifically, the TCI state configuration method of PDSCH may be illustrated in FIG. 14.

It should be noted that the beam involved in the present application may also be called a spatial domain filter or may correspond to a spatial domain filter. The transmit beam may be called a spatial domain transmission filter or may correspond to a spatial domain transmission filter, and the receive beam may be called a spatial domain receive filter or may correspond to a spatial domain receive filter. In some embodiments, a spatial domain transmission filter may also be referred to as a spatial relation or a spatial setting.

To facilitate better understandings of the embodiments of the present application, the high-frequency related information related to the present application is described below.

The research on NR system currently mainly considers two frequency bands, frequency range 1 (FR1) and frequency range 2 (FR2), and frequency domain ranges included in FR1 and FR2 are illustrated in Table 1.

Table 1

| Frequency band definition | Corresponding frequency range |
| --- | --- |
| FR1 | 410 MHz - 7.125 GHz |
| FR2 | 24.25 GHz - 52.6 GHz |

With the evolution of NR system, technologies in new frequency bands, namely high frequency bands, have also begun to be studied. Frequency domain range included in the new frequency band is illustrated in Table 2. For the convenience of description, it is represented with FRX in the present application. It should be understood that the name of the frequency band should not constitute any limitation. For example, FRX may be FR3. For another example, the FR2 in Table 1 is recorded as FR2-1, and the FRX in Table 2 is recorded as FR2-2. This application does not limit it.

Table 2

| Frequency band definition | Corresponding frequency range |
| --- | --- |
| FRX | 52.6 GHz - 71 GHz |

The FRX band includes both the licensed spectrum and unlicensed spectrum. In other words, the FRX band includes both the unshared spectrum and shared spectrum.

The unlicensed spectrum is a spectrum allocated by countries and regions that may be used for radio device communications. This spectrum is generally considered to be a shared spectrum. That is, as long as communication devices in different communication systems meet the regulatory requirements set by the country or region on the spectrum, they may use the spectrum without applying for exclusive spectrum authorization from the government.

In order to enable various communication systems that use unlicensed spectrum for radio communications to coexist in a friendly manner on the spectrum, some countries or regions have stipulated regulatory requirements that must be met for the use of unlicensed spectrum. For example, the communication device follows the "listen before talking (LBT)" principle. That is, before the communication device transmits a signal on a channel of the unlicensed spectrum, it needs to first perform channel listening. Only when the channel listening result is that the channel is idle, can the communication device transmit a signal. If the channel listening result of the communication device on the channel of the unlicensed spectrum is that the channel is busy, the communication device cannot transmit a signal. For another example, in order to ensure fairness, in one transmission, a duration that a communication device uses a channel of the unlicensed spectrum to transmit a signal cannot exceed a certain length of time. For yet another example, in order to prevent the power of the signal transmitted on the channel of the unlicensed spectrum from being too high and affecting the transmission of other important signals on the channel, the communication device needs to comply with the restriction of not exceeding the maximum power spectrum density when using the channel of the unlicensed spectrum for signal transmission.

The subcarrier spacing considered in the FRX band may be larger than that of FR2, and current candidate subcarrier spacings include at least one of: 120 kHz, 240 kHz, 480 kHz, 960 kHz, 1.92 MHz, or 3.84 MHz. As an example, parameter sets (Numerology) corresponding to these candidate subcarrier spacings are illustrated in Table 3 below. NCP represents normal cyclic prefix, and ECP represents extended cyclic prefix.

Table 3

| Subcarrier spacing | Symbol length | NCP length | ECP length | Sum of length of symbol and NCP and | Slot length |
| --- | --- | --- | --- | --- | --- |
| 120 kHz | 8.32 $\mu$s | 0.586 $\mu$s | 2.08 $\mu$s | 8.906 $\mu$s | 125 $\mu$s |

(continued)

| Subcarrier spacing | Symbol length | NCP length | ECP length | Sum of length of symbol and NCP and | Slot length |
|---|---|---|---|---|---|
| 480 kHz | 2.08 $\mu$s | 0.146 $\mu$s | 0.52 $\mu$s | 2.226 $\mu$s | 31.25 $\mu$s |
| 960 kHz | 1.04 $\mu$s | 0.073 $\mu$s | 0.26 $\mu$s | 1.113 $\mu$s | 15.625 $\mu$s |

In order to facilitate better understandings of the embodiments of the present application, problems solved by the present application are described.

In order to improve the transmission rate of the sidelink communication system, it is considered to use millimeter frequency bands in the sidelink transmission system, such as a frequency band higher than 52.6 GHz (e.g., a frequency band range of 52.6 GHz - 71 GHz, called frequency range 2-2 (FR2-2)). Subcarrier spacings supported in different frequency ranges are different. For example, in the first frequency range (FR1), 15 kHz, 30 kHz and 60 kHz subcarrier spacings are supported; in the 2-1 frequency range (i.e., FR2-1, i.e. the frequency band range of 24.25 GHz - 52.6 GHz), 60 kHz and 120 kHz subcarrier spacings are supported; and in the 2-2 frequency range (i.e., FR2-2), 120 kHz, 480 kHz and 960 kHz subcarrier spacings are supported. For the 480 kHz or 960 kHz subcarrier spacing, a duration corresponding to an OFDM symbol becomes shorter. In this case, the slot structure or channel structure is different from that of the existing NR SL system. In this case, how to design the S-SSB is a problem that needs to be solved.

Based on the above problems, in the present application, a slot structure based on M slots (i.e., a first time unit) is designed to transmit an S-SSB, thereby optimizing the scheme of S-SSB transmission.

To facilitate understandings of the technical solutions of the embodiments of the present application, the technical solutions of the present application are described in detail below through specific embodiments. The following related technologies as optional solutions may be arbitrarily combined with the technical solutions of the embodiments of the present application, and they all belong to the protection scope of the embodiments of the present application. The embodiments of the present application include at least part of the following contents.

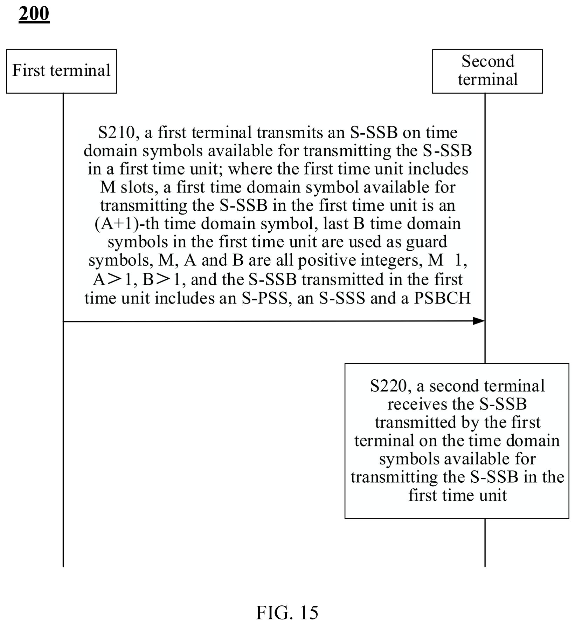

FIG. 15 is a schematic flowchart of a wireless communication method 200 according to the embodiments of the present application. As illustrated in FIG. 15, the wireless communication method 200 may include at least part of the following contents.

In S210, a first terminal transmits an S-SSB on time domain symbols available for transmitting the S-SSB in a first time unit. The first time unit includes M slots. A first time domain symbol available for transmitting the S-SSB in the first time unit is an (A+1)-th time domain symbol. Last B time domain symbols in the first time unit are used as guard symbols. M, A and B are all positive integers, and M≥1, A> 1, B>1. The S-SSB transmitted in the first time unit includes an S-PSS, an S-SSS and a PSBCH.

In S220, a second terminal receives the S-SSB transmitted by the first terminal on the time domain symbols available for transmitting the S-SSB in the first time unit.

Preferably, in the embodiments of the present application, M=2, 4, or 8.

The embodiments of the present application designs a slot structure based on the M slots (i.e., the first time unit), to transmit the S-SSB. For a subcarrier spacing of 480 kHz or 960 kHz or larger, multiple time domain symbols used as AGC and multiple time domain symbols used as GP are supported, and the transmission of the S-SSB is not affected, thereby improving the system transmission efficiency of the S-SSB and optimizing the scheme of S-SSB transmission.

That is, in the embodiments of the present application, in order to support a large subcarrier spacing, it is necessary to configure the multiple symbols used as AGC or the multiple symbols used as GP, and in order to improve the spectrum efficiency, the slot structure based on multiple slots may be adopted.

In some embodiments, the first time unit may be a periodic resource, or the first time unit may belong to a periodic resource, or a resource corresponding to the first time unit may be determined based on pre-configuration information or network configuration information.

In the embodiments of the present application, the first terminal may transmit one or more S-SSBs in the first time unit.

In some embodiments, in a case of M>1, the M slots are consecutive physical slots, or the M slots are consecutive slots available for sidelink transmission. That is, the first time unit may include multiple consecutive slots. Optionally, the first time unit may be referred to as an aggregate slot, or slot aggregation, or a super slot, or a slot group, or multiple slots (or multi-slots).

Specifically, the physical slot is defined relative to a logical slot. A slot belonging to a resource pool is called the logical slot, and $10240 \cdot 2^{\mu_{SL}}$ slots included in 10240 milliseconds (ms) (i.e., a system frame number, SFN) period) are called physical slots, where $\mu_{SL}$ is a parameter related to the sidelink subcarrier spacing, as illustrated in Table 4.

Table 4

| $\mu_{SL}$ | Subcarrier spacing $\Delta f = 2^{\mu} \cdot 15[kHz]$ |
|---|---|
| 0 | 15 |
| 1 | 30 |
| 2 | 60 |
| 3 | 120 |
| 5 | 480 |
| 6 | 960 |

In some embodiments, a value of M is determined based on at least one of: protocol predefined information, sidelink bandwidth part (BWP) configuration information, or resource pool configuration information.

In some embodiments, information carried on first A time domain symbols in the first time unit is a repetition of information carried on the (A+1)-th time domain symbol, or the information carried on the first A time domain symbols in the first time unit is a repetition of information carried on the (A+1)-th time domain symbol to a 2A-th time domain symbol, or the information carried on the first A time domain symbols in the first time unit includes a repetition of information carried on the S-PSS time domain symbol and/or a repetition of information carried on the S-SSS time domain symbol.

Specifically, the first A time domain symbols in the first time unit may be used for AGC adjustment or AGC training.

In some embodiments, a value of A is determined based on at least one of: protocol predefined information, sidelink BWP configuration information, or resource pool configuration information.

In some embodiments, the value of A is determined based on first indication information included in the sidelink BWP configuration information or the resource pool configuration information. For example, the sidelink BWP configuration information or the resource pool configuration information includes the first indication information, and the first indication information is used to indicate the value of A.

In some embodiments, the sidelink BWP configuration information or the resource pool configuration information includes second indication information. The second indication information is used to indicate a first time domain symbol position of a PSSCH or a PSCCH or the PSBCH or the S-PSS or the S-SSB, and the value of A is determined based on content indicated by the second indication information. For example, in a case where the second indication information indicates that the first time domain symbol position of the PSSCH is symbol 4, i.e., the 5th time domain symbol in the slot (the first symbol in the slot corresponding to symbol 0), the value of A is 4. In this case, it is assumed that the sidelink transmission resources in the first time unit start from the first time domain symbol.

In some embodiments, the sidelink BWP configuration information or the resource pool configuration information includes third indication information and fourth indication information. The third indication information is used to indicate the first time domain symbol position of the PSSCH or the PSCCH or the PSBCH or the S-PSS or the S-SSB. The fourth indication information is used to indicate a position of the first time domain symbol available for sidelink transmission. The value of A is determined based on content indicated by the third indication information and content indicated by the fourth indication information.

For example, the sidelink BWP configuration information or the resource pool configuration information includes the third indication information and the fourth indication information. The third indication information is used to indicate the first time domain symbol position of the PSSCH or the PSCCH or the PSBCH or the S-PSS or the S-SSB. The fourth indication information is used to indicate a position of a first time domain symbol available for sidelink transmission in one slot, or the fourth indication information is used to indicate a position of a first time domain symbol available for sidelink transmission in the first time unit. The value of A may be determined based on the third indication information and the fourth indication information. For example, the third indication information indicates that the first time domain symbol position of the PSSCH is symbol 6, and the fourth indication information indicates that the first time domain symbol position available for the sidelink transmission in one slot is symbol 2. In this case, the value of A is 4.

In some embodiments, the value of A is determined based on a first sidelink subcarrier spacing and a second sidelink subcarrier spacing.

The first sidelink subcarrier spacing is determined based on the sidelink BWP configuration information, and the second sidelink subcarrier spacing is determined based on protocol predefined information, pre-configuration information or network configuration information. Optionally, the second sidelink subcarrier spacing is a reference subcarrier spacing. For example, the second sidelink subcarrier spacing is 120 kHz, 60 kHz, 30 kHz, or 15 kHz.

For example, the value of A is determined according to the first sidelink subcarrier spacing $\mu_{SL1}$ and the second sidelink subcarrier spacing $\mu_{SL2}$. The first sidelink subcarrier spacing $\mu_{SL1}$ is determined according to the sidelink BWP configuration information, and the second sidelink subcarrier spacing $\mu_{SL2}$ may be a reference subcarrier spacing. For

example, $\mu_{SL2}$ = 3, which corresponds to a 120 kHz subcarrier spacing. For example, $A = \dfrac{2^{\mu_{SL1}}}{2^{\mu_{SL2}}}$. If $\mu_{SL1}$ = 5, which corresponds to a 480 kHz subcarrier spacing, A=4. If $\mu_{SL1}$ = 6, which corresponds to a 960 kHz subcarrier spacing, A=8.

In some embodiments, a value of B is determined based on at least one of: protocol predefined information, sidelink BWP configuration information, or resource pool configuration information.

In some embodiments, the value of B is determined based on fifth indication information included in the sidelink BWP configuration information or the resource pool configuration information. For example, the sidelink BWP configuration information or the resource pool configuration information includes the fifth indication information, and the fifth indication information is used to indicate the value of B.

In some embodiments, the sidelink BWP configuration information or the resource pool configuration information includes sixth indication information and seventh indication information. The sixth indication information is used to indicate a position of the first time domain symbol available for the sidelink transmission, and the seventh indication information is used to indicate a length or number of time domain symbols available for the sidelink transmission; or, the sixth indication information is used to indicate a position of the first time domain symbol available for the S-SSB transmission, and the seventh indication information is used to indicate a length or number of time domain symbols available for the S-SSB transmission. The value of B is determined based on content indicated by the sixth indication information and content indicated by the seventh indication information.

For example, the sidelink BWP configuration information or the resource pool configuration information includes the sixth indication information and seventh indication information. The sixth indication information is used to indicate the position of the first time domain symbol available for the sidelink transmission in one slot or a first time unit. The seventh indication information is used to indicate the length or number of time domain symbols available for the sidelink transmission in the first time unit. The value of B may be determined based on the sixth indication information and the seventh indication information. For example, the sixth indication information indicates that the position of the first time domain symbol available for the sidelink transmission in one slot is symbol 0. The seventh indication information indicates that the number of symbols available for the sidelink transmission is 24, which is greater than the number of time domain symbols included in one slot and less than the number of time domain symbols included in two slots. Therefore, it may be assumed that the first time unit includes 2 slots. There are a total of 28 symbols in a case of a normal cyclic prefix (CP). Accordingly, the number of GP symbols is 4, that is, B=4.

In some embodiments, the sidelink BWP configuration information or the resource pool configuration information includes eighth indication information. The eighth indication information is used to indicate the length or number of time domain symbols available for the sidelink transmission, or the eighth indication information is used to indicate the length or number of time domain symbols available for the S-SSB transmission. The value of B is determined based on content indicated by the eighth indication information.

For example, the sidelink BWP configuration information or the resource pool configuration information includes the eighth indication information. The eighth indication information is used to indicate the length or number of time domain symbols available for the sidelink transmission in the first time unit, and the value of B may be determined according to the eighth indication information. For example, the eighth indication information indicates that the number of symbols for sidelink transmission is 24, which is greater than the number of time domain symbols included in one slot and less than the number of time domain symbols included in two slots. Therefore, it may be assumed that the first time unit includes 2 slots, and both the two slots are used for sidelink transmission. There are a total of 28 symbols in the case of normal CP. Accordingly, the number of GP symbols is 4, that is, B=4.

In some embodiments, the sidelink BWP configuration information or the resource pool configuration information includes ninth indication information and tenth indication information. The ninth indication information is used to indicate a length or number of time domain symbols available for sidelink transmission, or the ninth indication information is used to indicate a length or number of time domain symbols available for S-SSB transmission. The tenth indication information is used to indicate the number of slots included in the first time unit. The value of B is determined based on content indicated by the ninth indication information and content indicated by the tenth indication information.

For example, the sidelink BWP configuration information or the resource pool configuration information includes the ninth indication information and the tenth indication information. The ninth indication information is used to indicate the length or number of time domain symbols available for the sidelink transmission in the first time unit. The tenth indication information is used to indicate the number of slots included in the first time unit. The value of B may be determined based on the ninth indication information and tenth indication information. For example, the ninth indication information indicates that the number of symbols for the sidelink transmission is 24. The tenth indication information indicates that the first time unit includes 2 slots, that is, M=2. There are a total of 28 symbols in the case of normal CP. Accordingly, the number of GP symbols is 4, that is, B=4.

In some embodiments, the value of B is determined based on the first sidelink subcarrier spacing and the second sidelink subcarrier spacing. The first sidelink subcarrier spacing is determined based on the sidelink BWP configuration information, and the second sidelink subcarrier spacing is determined based on the protocol predefined information, pre-configuration information or network configuration information. Optionally, the second sidelink subcarrier spacing is a reference subcarrier spacing. For example, the second sidelink subcarrier spacing is 120 kHz, 60 kHz, 30 kHz, or 15 kHz.

For example, the value of B is determined according to the first sidelink subcarrier spacing $\mu_{SL1}$ and the second sidelink subcarrier spacing $\mu_{SL2}$. The first sidelink subcarrier spacing $\mu_{SL1}$ is determined according to the sidelink BWP configuration information, and the second sidelink subcarrier spacing may be the reference subcarrier spacing. For example, $\mu_{SL2} = 3$, which corresponds to a 120 kHz subcarrier spacing. For example: $B = \frac{2^{\mu_{SL1}}}{2^{\mu_{SL2}}}$. If $\mu_{SL1} = 5$, which corresponds to a 480 kHz subcarrier spacing, B=4. If $\mu_{SL1} = 6$, which corresponds to a 960 kHz subcarrier spacing, B=8.

For example, in the following example, one slot includes 14 symbols (i.e., corresponding to a normal CP), and the embodiments of the present application are also applicable to a case where one slot includes 12 symbols (i.e., corresponding to an extended CP).

It should be noted that, in the following example, the GP symbol may also be called a guard symbol.

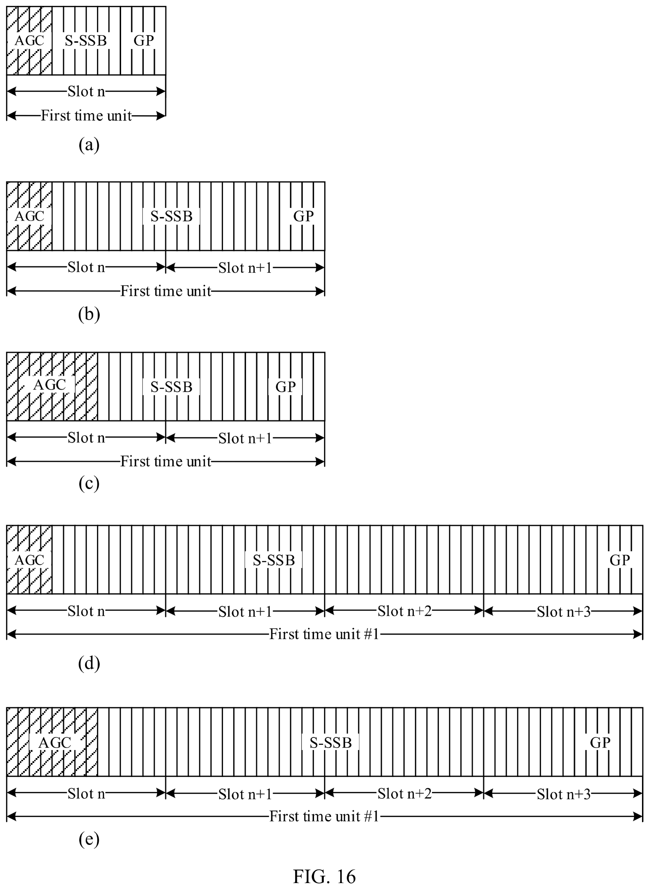

In some embodiments, the first time unit may be as illustrated in FIG. 16.

Specifically, the first time unit in (a) of FIG. 16 includes 1 slot, i.e., M=1. The first S-SSB time domain symbol is a 5th time domain symbol in the first time unit, i.e., A=4. First 4 time domain symbols in the first time unit may be used as AGC, and last 4 time domain symbols in the first time unit are used as GP, i.e., B=4. Remaining time domain symbols in the first time unit, except for the first 4 and last 4 time domain symbols, are time domain symbols available for S-SSB transmission. For example, the first time unit in (a) of FIG. 16 is applicable to the case of the 480 kHz subcarrier spacing.

Specifically, the first time unit in (b) of FIG. 16 includes 2 slots, i.e., M=2. The first S-SSB time domain symbol is a 5th time domain symbol in the first time unit, i.e., A=4. First 4 time domain symbols in the first time unit may be used as AGC, and last 4 time domain symbols in the first time unit are used as GP, i.e., B=4. Remaining time domain symbols in the first time unit, except for the first 4 and last 4 time domain symbols, are symbols available for S-SSB transmission. For example, the first time unit in (b) of FIG. 16 is applicable to the case of the 480 kHz subcarrier spacing.

Specifically, the first time unit in (c) of FIG. 16 includes 2 slots, i.e., M=2. The first S-SSB time domain symbol is a 9th time domain symbol in the first time unit, i.e., A=8. First 8 time domain symbols in the first time unit may be used as AGC, and last 8 time domain symbols in the first time unit are used as GP, i.e., B=8. Remaining time domain symbols in the first time unit, except for the first 8 and last 8 time domain symbols, are symbols available for S-SSB transmission. For example, the first time unit in (c) of FIG. 16 is applicable to the case of the 480 kHz or 960 kHz subcarrier spacing.

Specifically, the first time unit in (d) of FIG. 16 includes 4 slots, i.e., M=4. The first S-SSB time domain symbol is a 5th time domain symbol in the first time unit, i.e., A=4. The first 4 time domain symbols in the first time unit may be used as AGC, and the last 4 time domain symbols in the first time unit are used as GP, i.e., B=4. Remaining time domain symbols in the first time unit, except for the first 4 and last 4 time domain symbols, are symbols available for S-SSB transmission. For example, the first time unit in (d) of FIG. 16 is applicable to the case of the 480 kHz subcarrier spacing.

Specifically, the first time unit in (e) of FIG. 16 includes 4 slots, i.e., M=4. The first S-SSB time domain symbol is a 9th time domain symbol in the first time unit, i.e., A=8. First 8 time domain symbols in the first time unit may be used as AGC, and last 8 time domain symbols in the first time unit are used as GP, i.e., B=8. Remaining time domain symbols in the first time unit, except for the first 8 and last 8 time domain symbols, are symbols available for S-SSB transmission. For example, the first time unit in (e) of FIG. 16 is applicable to the case of the 480 kHz or 960 kHz subcarrier spacing.

In some embodiments, a first S-SSB transmitted in the first time unit occupies A1 time domain symbols and B1 PRBs (corresponding to 12·B1 subcarriers, i.e., 12×B1 subcarriers). An S-PSS in the first S-SSB occupies 2 adjacent time domain symbols and B2 PRBs (corresponding to 12·B2 subcarriers i.e., 12×B2 subcarriers), and/or an S-SSS in the first S-SSB occupies 2 adjacent time domain symbols and B2 PRBs (corresponding to 12·B2 subcarriers). The first S-SSB is any S-SSB transmitted in the first time unit. A1, B1 and B2 are all positive integers, and B1≥B2.

Specifically, the S-PSS and the S-SSS involved in this embodiment have respectively an S-PSS structure and an S-SSS structure based on the NR SL system.

In some embodiments, the first time domain symbol available for the S-SSB transmission is a next time domain symbol of the last AGC symbol in the first time unit.

In some embodiments, in a case where the number of slots M included in the first time unit varies, it may correspond to different S-SSB structures.

In some embodiments, a value of A1 is determined based on at least one of: protocol predefined information, sidelink BWP configuration information or resource pool configuration information; and/or, a value of B1 is determined based on at least one of: protocol predefined information, sidelink BWP configuration information or resource pool configuration information; and/or, a value of B2 is determined based on at least one of: protocol predefined information, sidelink BWP configuration information or resource pool configuration information.

In some embodiments, sequences corresponding to the S-PSS on the 2 adjacent time domain symbols are the same, and/or sequences corresponding to the S-SSS on the 2 adjacent time domain symbols are the same.

In some embodiments, part of subcarriers in the B2 PRBs are used to transmit the S-PSS, and/or part of the subcarriers in the B2 PRBs are used to transmit the S-SSS.

In some embodiments, remaining time domain symbols of the A1 time domain symbols occupied by the first S-SSB, except for the 2 time domain symbols occupied by the S-PSS and the 2 time domain symbols occupied by the S-SSS, are available for mapping the PSBCH.

In some embodiments, in a case of B2<B1, on the 2 time domain symbols occupied by the S-PSS and the 2 time domain symbols occupied by the S-SSS in the first S-SSB, remaining (B1-B2) PRBs are available for mapping the PSBCH.

In some embodiments, the time domain symbols occupied by the S-SSS in the first S-SSB are located after the time domain symbols occupied by the S-PSS in the first S-SSB.

In some embodiments, a gap between the time domain symbol occupied by the S-SSS in the first S-SSB and the time domain symbol occupied by the S-PSS in the first S-SSB is C time domain symbol(s), where C is an integer greater than or equal to 0. That is, the gap between the S-PSS and the S-SSS is the C time domain symbols. Optionally, a value of C is determined based on at least one of: protocol predefined information, sidelink BWP configuration information, or resource pool configuration information.

In some embodiments, the S-PSS in the first S-SSB is mapped starting from a D-th time domain symbol available for the first S-SSB transmission, where D is an integer greater than or equal to 1. That is, the S-PSS is mapped starting from the D-th symbol available for the S-SSB transmission. Optionally, a value of D is determined based on at least one of: protocol predefined information, sidelink BWP configuration information, or resource pool configuration information.

In some embodiments, in a case of B2<B1, the S-PSS and the S-SSS in the first S-SSB are located in middle B2 PRBs of the first S-SSB, or a frequency domain starting position of each of the S-PSS and S-SSS in the first S-SSB is the same as a starting position of the first S-SSB, or a frequency domain ending position of the S-PSS and S-SSS in the first S-SSB is the same as a frequency domain ending position of the first S-SSB.

In some embodiments, if (B1-B2) is a multiple of 2, the B2 PRBs occupied by each of the S-PSS and S-SSS in the first S-SSB correspond to B2 PRBs in the middle of the B1 PRBs.

In some embodiments, if (B1-B2) is not a multiple of 2, a gap between the frequency domain starting position of each of the S-PSS and S-SSS in the first S-SSB and the frequency domain starting position of the S-SSB is ((B1-B2-1)/2) PRBs, and a gap between the frequency domain ending position of each of the S-PSS and S-SSS in the first S-SSB and the frequency domain ending position of the first S-SSB is ((B1-B2+1)/2) PRBs.

In some embodiments, if (B1-B2) is not a multiple of 2, the gap between the frequency domain starting position of each of the S-PSS and S-SSS in the first S-SSB and the frequency domain starting position of the first S-SSB is floor ((B1-B2)/2) PRBs, and the gap between the frequency domain ending position of each of the S-PSS and S-SSS in the first S-SSB and the frequency domain ending position of the first S-SSB is floor ((B1-B2)/2)+1 or ceil ((B1-B2)/2) PRBs.

In some embodiments, if (B1-B2) is not a multiple of 2, the gap between the frequency domain starting position of each of the S-PSS and S-SSS in the first S-SSB and the frequency domain starting position of the first S-SSB is ((B1-B2+1)/2) PRBs, and the gap between the frequency domain ending position of each of the S-PSS and S-SSS in the first S-SSB and the frequency domain ending position of the first S-SSB is ((B1-B2-1)/2) PRBs.

In some embodiments, if (B1-B2) is not a multiple of 2, the gap between the frequency domain starting position of each of the S-PSS and S-SSS in the first S-SSB and the frequency domain starting position of the first S-SSB is ceil ((B1-B2)/2) PRBs, and the gap between the frequency domain ending position of the S-PSS and S-SSS in the first S-SSB and the frequency domain ending position of the first S-SSB is floor ((B1-B2)/2) or ceil ((B1-B2)/2)-1 PRBs.

In some embodiments, E S-SSBs may be transmitted in the first time unit, where E is a positive integer. In a case where E is greater than 1, a gap between two adjacent S-SSBs among the E S-SSBs is F time domain symbol(s), where F is an integer greater than or equal to 0.

In some embodiments, no sidelink data or sidelink signal is transmitted in the F time domain symbol(s), or the F time domain symbol(s) are guard symbol(s).

In some embodiments, among the B1 PRBs corresponding to the first S-SSB, no sidelink data or sidelink signal is transmitted in the F time domain symbol(s). Optionally, the F time domain symbol(s) are used as guard symbol(s).

In some embodiments, the E S-SSBs include a second S-SSB, and A1 time domain symbols occupied by the second S-SSB are located in different slots.

In some embodiments, a value of E is determined based on at least one of: protocol predefined information, sidelink BWP configuration information, or resource pool configuration information; and/or, a value of F is determined based on at least one of: protocol predefined information, sidelink BWP configuration information, or resource pool configuration information.

Specifically, in the high-frequency band, the terminal usually utilizes a beam-based transmission manner, and different S-SSBs may be transmitted using different transmit beams. Therefore, for two adjacent S-SSBs, the transmitting terminal (i.e., the first terminal) needs to switch the transmit beam, and the switching of the transmit beam needs processing time. If the processing time is greater than a length corresponding to the CP, one or more symbols are required for beam switching. The F time domain symbols are used for the transmitting terminal (i.e., the first terminal) to perform beam switching.

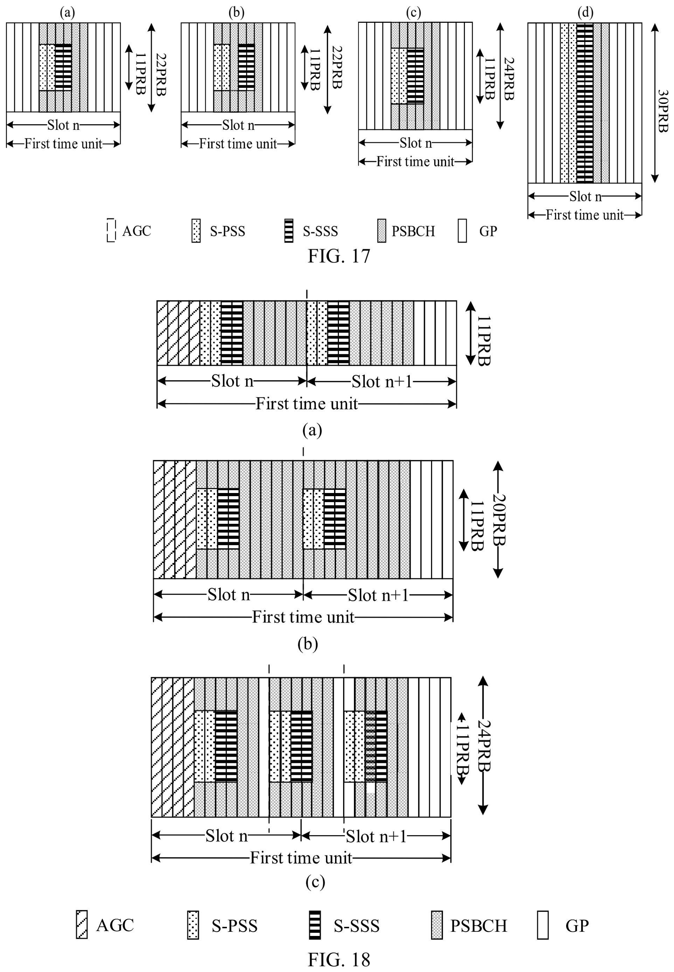

In some embodiments, the first time unit includes one slot, that is, M=1. As illustrated in FIG. 17, the first S-SSB time domain symbol is a 5th time domain symbol in the first time unit, that is, A=4. The first 4 time domain symbols in the first time unit may be used as AGC, and the last 4 time domain symbols in the first time unit are used as GP, that is, B=4. The first time unit includes 6 time domain symbols available for transmitting S-SSB; and the first time unit includes one S-SSB, that is, E=1, and A1=6.

Specifically, as illustrated in (a) of FIG. 17, the S-PSS is mapped starting from the first symbol available for S-SSB transmission (i.e., D=1). The S-PSS and the S-SSS each occupy 2 time domain symbols, a time domain position of the S-SSS is adjacent to a time domain position of the S-PSS (i.e., C=0), and remaining symbols are used to map the PSBCH. The frequency domain resources of the S-SSB are 22 PRBs (i.e., B1=22), and the frequency domain resources of the S-PSS and the frequency domain resources of the S-SSS are each 11 PRBs (i.e., B2=11). Remaining PRBs in the S-PSS and S-SSS symbols are also used to map the PSBCH. The gap between a frequency domain starting position of the S-PSS/S-SSS and a frequency domain starting position of the S-SSB is 5 PRBs. Correspondingly, the gap between a frequency domain ending position of the S-PSS/S-SSS and a frequency domain ending position of the S-SSB is 6 PRBs.

Specifically, as illustrated in (b) of FIG. 17, it is similar to (a) of FIG. 17, except that there is one time domain symbol between the S-PSS and the S-SSS, that is, C=1 (in (a) of FIG. 17, C=0).

Specifically, as illustrated in (c) of FIG. 17, it is similar to (a) of FIG. 17, except that in order to increase the resources available for the S-SSB transmission, a size of the frequency domain of the S-SSB is 24 PRBs (i.e., B1=24), and sizes of the frequency domains of the S-PSS and S-SSS are each 11 PRBs (i.e., B2=11).

Specifically, as illustrated in (d) of FIG. 17, the S-PSS is mapped starting from the first symbol available for the S-SSB transmission (i.e., D=1). The S-PSS and the S-SSS each occupy 2 time domain symbols, a time domain position of the S-SSS is adjacent to a time domain position of the S-PSS (i.e., C=0), and the remaining symbols are used to map the PSBCH. The frequency domain resources of the S-SSB are 30 PRBs (i.e., B1=30), and the frequency domain resources of the S-PSS and the S-SSS are also each 30 PRBs (i.e., B2=30). That is, in 6 time domain symbols corresponding to one S-SSB, the S-PSS, the S-SSS and the PSBCH each correspond to 2 symbols.

In some embodiments, the first time unit includes 2 slots, i.e., M=2. As illustrated in FIG. 18, the first S-SSB time domain symbol is the 5th time domain symbol in the first time unit, i.e., A=4. The first 4 time domain symbols in the first time unit may be used as AGC, and the last 4 time domain symbols in the first time unit are used as GP, i.e., B=4. The first time unit includes 20 time domain symbols available for transmitting the S-SSB.

Specifically, as shown in (a) of FIG. 18, one first time unit includes 2 S-SSBs, i.e., E=2. The two S-SSBs are adjacent in time domain, i.e., F=0. Each S-SSB corresponds to 10 symbols (i.e., A1=10). For each S-SSB, the S-PSS is mapped starting from the first symbol available for S-SSB transmission (i.e., D=0), and a time domain position of the S-SSS is adjacent to a time domain position of the S-PSS (i.e., C=0). The S-PSS and S-SSS each occupy 2 time domain symbols, and the remaining 6 symbols are used to map PSBCH. The frequency domain resources of the S-SSB are 11 PRBs (i.e., B1=11), and the frequency domain resources of S-PSS and S-SSS are also each 11 PRBs (i.e., B2=11).

Specifically, as illustrated in (b) of FIG. 18, one first time unit includes 2 S-SSBs, i.e., E=2. The two S-SSBs are adjacent in time domain, i.e., F=0. Each S-SSB corresponds to 10 symbols (i.e., A1=10). For each S-SSB, the S-PSS is mapped starting from the first symbol available for the S-SSB transmission (i.e., D=0), and a time domain position of the S-SSS is adjacent to a time domain position of the S-PSS (i.e., C=0). The S-PSS and S-SSS each occupy 2 time domain symbols, and the remaining 6 symbols are used to map the PSBCH. The frequency domain resources of the S-SSB are 20 PRBs (i.e., B1=20), and the frequency domain resources of S-PSS and S-SSS are each 11 PRBs (i.e., B2=11). The remaining PRBs in the S-PSS and S-SSS symbols are also used to map the PSBCH. The gap between the frequency domain starting position of the S-PSS/S-SSS and the frequency domain starting position of the S-SSB is 4 PRBs. Correspondingly, the gap between the frequency domain ending position of the S-PSS/S-SSS and the frequency domain ending position of the S-SSB is 5 PRBs.

Specifically, as illustrated in (c) of FIG. 18, one first time unit includes 3 S-SSBs, i.e., E=3. There is one time domain symbol between two S-SSBs, i.e., F=1. Each S-SSB corresponds to 6 symbols (i.e., A1=6). For each S-SSB, the S-PSS is mapped starting from the first symbol available for the S-SSB transmission (i.e., D=0), and a time domain position of the S-SSS is adjacent to a time domain position of the S-PSS (i.e., C=0). The S-PSS and S-SSS each occupy 2 time domain symbols, and the remaining 2 symbols are used to map the PSBCH. The frequency domain resources of the S-SSB are 24 PRBs (i.e., B1=24), and the frequency domain resources of the S-PSS and S-SSS are each 11 PRBs (i.e., B2=11). The remaining PRBs in the S-PSS and S-SSS symbols are also used to map the PSBCH. The gap between the frequency domain starting position of the S-PSS/S-SSS and the frequency domain starting position of the S-SSB is 6 PRBs. Correspondingly, the gap between the frequency domain ending position of the S-PSS/S-SSS and the frequency domain ending position of the S-SSB is 7 PRBs.

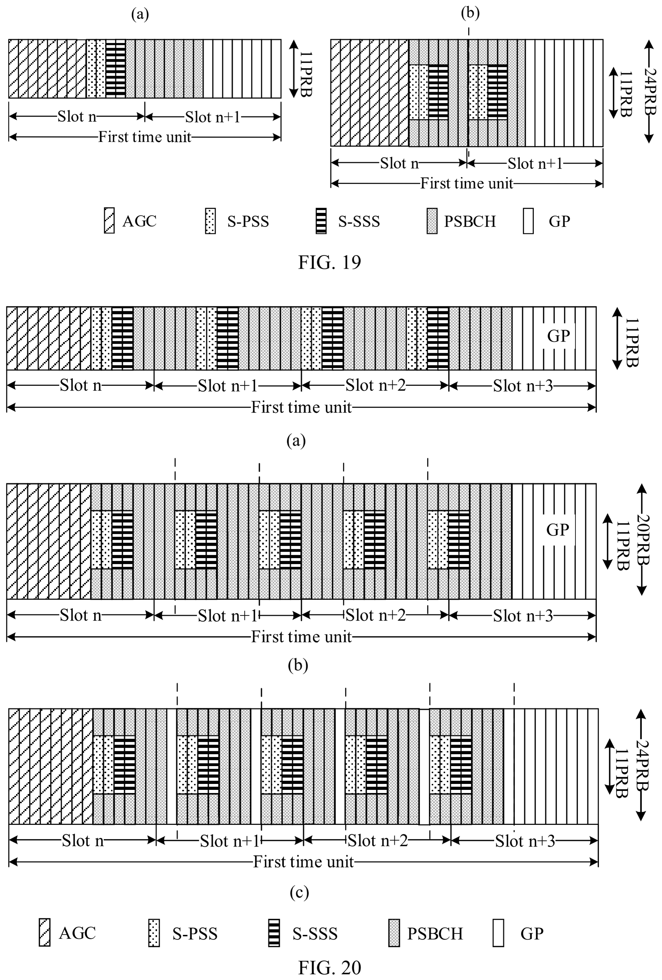

In some embodiments, the first time unit includes 2 slots, i.e., M=2. As illustrated in FIG. 19, the first S-SSB time domain symbol is a 9th time domain symbol in the first time unit, i.e., A=8. The first 8 time domain symbols in the first time unit may be used as AGC, and the last 8 time domain symbols in the first time unit are used as GP, i.e., B=8. The first time unit includes 12 time domain symbols available for transmitting the S-SSB.

Specifically, as illustrated in (a) of FIG. 19, one first time unit includes 1 S-SSB, that is, E=1. The S-SSB corresponds to 12 symbols (i.e., A1=12), the S-PSS is mapped starting from the first symbol available for the S-SSB transmission (i.e., D=0), and a time domain position of the S-SSS is adjacent to a time domain position of the S-PSS (i.e., C=0). The S-PSS and S-SSS each occupy 2 time domain symbols, and the remaining 8 symbols are used to map the PSBCH. The frequency domain resources of the S-SSB are 11 PRBs (i.e., B1=11), and the frequency domain resources of the S-PSS and S-SSS are also each 11 PRBs (i.e., B2=11).

Specifically, as illustrated in (b) of FIG. 19, one first time unit includes 2 S-SSBs, i.e., E=2. The two S-SSBs are adjacent in time domain, i.e., F=0. Each S-SSB corresponds to 6 symbols (i.e., A1=6). For each S-SSB, the S-PSS is mapped starting from the first symbol available for the S-SSB transmission (i.e., D=0), and a time domain position of the S-SSS is adjacent to a time domain position of the S-PSS. The S-PSS and S-SSS each occupy 2 time domain symbols, and the remaining 2 symbols are used to map the PSBCH. The frequency domain resources of S-SSB are 24 PRBs (i.e., B1=24), and the frequency domain resources of S-PSS and S-SSS are each 11 PRBs (i.e., B2=11). The remaining PRBs in the S-PSS and S-SSS symbols are also used to map the PSBCH. The gap between the frequency domain starting position of the S-PSS/S-SSS and the frequency domain starting position of the S-SSB is 6 PRBs. Correspondingly, the gap between the frequency domain ending position of the S-PSS/S-SSS and the frequency domain ending position of the S-SSB is 7 PRBs.

In some embodiments, the first time unit includes 4 slots, i.e., M=4. As illustrated in FIG. 20, the first S-SSB time domain symbol is a 9th time domain symbol in the first time unit, i.e., A=8. The first 8 time domain symbols in the first time unit may be used as AGC, and the last 8 time domain symbols in the first time unit are used as GP, i.e., B=8. The first time unit includes 40 time domain symbols available for transmitting the S-SSB.

Specifically, as illustrated in (a) of FIG. 20, one first time unit includes 4 S-SSBs, i.e., E=4. Two adjacent S-SSBs are adjacent in time domain, i.e., F=0. One S-SSB corresponds to 10 symbols (i.e., A1=10). The S-PSS is mapped starting from the first symbol available for S-SSB transmission (i.e., D=0), and a time domain position of the S-SSS is adjacent to a time domain position of the S-PSS (i.e., C=0). The S-PSS and S-SSS each occupy 2 time domain symbols, and the remaining 6 symbols are used to map PSBCH. The frequency domain resources of the S-SSB are 11 PRBs (i.e., B1=11), and the frequency domain resources of the S-PSS and S-SSS are also each 11 PRBs (i.e., B2=11).

Specifically, as illustrated in (b) of FIG. 20, one first time unit includes 5 S-SSBs, i.e., E=5. Two adjacent S-SSBs are adjacent in time domain, i.e., F=0. Each S-SSB corresponds to 8 symbols (i.e., A1=8). For each S-SSB, the S-PSS is mapped starting from the first symbol available for S-SSB transmission (i.e., D=0), and a time domain position of the S-SSS is adjacent to a time domain position of the S-PSS (i.e., C=0). The S-PSS and S-SSS each occupy 2 time domain symbols, and the remaining 4 symbols are used to map PSBCH. The frequency domain resources of the S-SSB are 20 PRBs (i.e., B1=20), and the frequency domain resources of the S-PSS and S-SSS are each 11 PRBs (i.e., B2=11). The remaining PRBs in the S-PSS and S-SSS symbols are also used to map PSBCH, and the gap between the frequency domain starting position of the S-PSS/S-SSS and the frequency domain starting position of the S-SSB is 4 PRBs. Correspondingly, the gap between the frequency domain ending position of the S-PSS/S-SSS and the frequency domain ending position of the S-SSB is 5 PRBs.

Specifically, as illustrated in (c) of FIG. 20, One first time unit includes 5 S-SSBs, i.e., E=5. There is one time domain symbol between two adjacent S-SSBs, i.e., F=1. Each S-SSB corresponds to 7 symbols (i.e., A1=7). For each S-SSB, the S-PSS is mapped starting from the first symbol available for S-SSB transmission (i.e., D=0), and a time domain position of the S-SSS is adjacent to a time domain position of the S-PSS (i.e., C=0). The S-PSS and S-SSS each occupy 2 time domain symbols, and the remaining 3 symbols are used to map PSBCH. The frequency domain resources of the S-SSB are 24 PRBs (i.e., B1=24), and the frequency domain resources of the S-PSS and S-SSS are each 11 PRBs (i.e., B2=20). The remaining PRBs in the S-PSS and S-SSS symbols are also used to map PSBCH. The gap between the frequency domain starting position of the S-PSS/S-SSS and the frequency domain starting position of the S-SSB is 6 PRBs. Correspondingly, the gap between the frequency domain ending position of the S-PSS/S-SSS and the frequency domain ending position of the S-SSB is 7 PRBs.

Therefore, in this embodiment, based on the number of symbols available for S-SSB transmission in one first time unit, the number of time domain symbols and the size of frequency domain resources included in each S-SSB are flexibly configured. As a result, for the first time unit with any structure, a corresponding S-SSB structure may be configured, and a multi-slot S-SSB structure with any number of symbols available for S-SSB transmission in one first time unit may be supported.

In some embodiments, the first terminal determines a DMRS pattern of the PSBCH according to first information.

The first information includes first sub-information and/or second sub-information. The first sub-information is used to determine a position of a first PSBCH DMRS time domain symbol, and the second sub-information is used to determine a symbol interval between two adjacent PSBCH DMRS symbols.

Specifically, the first terminal may map the PSBCH DMRS in the first time unit based on the DMRS pattern of the PSBCH.

It should be noted that the "DMRS pattern of PSBCH" may also be referred to as the "DMRS design of PSBCH", which is not limited in the embodiments of the present application.

In some embodiments, the first sub-information includes but is not limited to at least one of: a time domain offset of the first PSBCH DMRS time domain symbol relative to a first time domain symbol corresponding to transmission resources of the first S-SSB, a time domain offset of the first PSBCH DMRS time domain symbol relative to a first time domain symbol that only transmits the PSBCH (i.e., does not transmit the S-PSS or the S-SSS) in the transmission resources of the first S-SSB, time domain symbol index information or time domain position information of the first PSBCH DMRS time domain symbol in the A1 time domain symbols that are included in the transmission resources of the first S-SSB, a time domain offset of the first PSBCH DMRS time domain symbol relative to the first time domain symbol available for transmitting S-SSB in the first time unit, time domain symbol index information or time domain position information of the first PSBCH DMRS time domain symbol in the first time unit, or a time domain offset of the first PSBCH DMRS time domain symbol relative to a first time domain symbol in the first time unit or a first sidelink time domain symbol in the first time unit.

It should be understood that the first time domain symbol available for transmitting the S-SSB is a first time domain symbol of mapping the S-SSB, or the first time domain symbol available for transmitting the S-SSB is a first time domain symbol located after the AGC symbol.

It should be noted that the "time domain offset" may be expressed with the number of time domain symbols or other time domain units, which is not limited in the embodiments of the present application.

In some embodiments, a value of the second sub-information is a subset of a set {2, 4, 8, 12, 16, 20, 24, 32, 40}.

In some embodiments, the first sub-information is protocol predefined information, or the first sub-information belongs to sidelink BWP configuration information, or the first sub-information is determined based on the sidelink BWP configuration information, or the first sub-information belongs to resource pool configuration information, or the first sub-information is determined based on the resource pool configuration information.

In some embodiments, the second sub-information is protocol predefined information, or the second sub-information belongs to sidelink BWP configuration information, or the second sub-information is determined based on the sidelink BWP configuration information, or the second sub-information belongs to resource pool configuration information, or the second sub-information is determined based on the resource pool configuration information.

In some embodiments, the time domain symbols for transmitting the PSBCH DMRS in the A1 time domain symbols occupied by the first S-SSB include but are not limited to one of:

a first time domain symbol for transmitting the S-PSS;
a second time domain symbol for transmitting the S-PSS;
the first time domain symbol for transmitting the S-PSS and a first time domain symbol for transmitting the S-SSS;
the first time domain symbol for transmitting the S-PSS and a second time domain symbol for transmitting the S-SSS; or
each time domain symbol for transmitting the S-PSS and/or each time domain symbol for transmitting the S-SSS.

That is, in this embodiment, the PSBCH DMRS in the first S-SSB is located in the first time domain symbol for transmitting the S-PSS; or, the PSBCH DMRS in the first S-SSB is located in the second time domain symbol for transmitting the S-PSS; or, the PSBCH DMRS in the first S-SSB is located in the first time domain symbol for transmitting the S-PSS and the first time domain symbol for transmitting the S-SSS; or, the PSBCH DMRS in the first S-SSB is located in the first time domain symbol for transmitting the S-PSS and the second time domain symbol for transmitting the S-SSS; or, the PSBCH DMRS in the first S-SSB is located in each time domain symbol for transmitting the S-PSS and S-SSS.

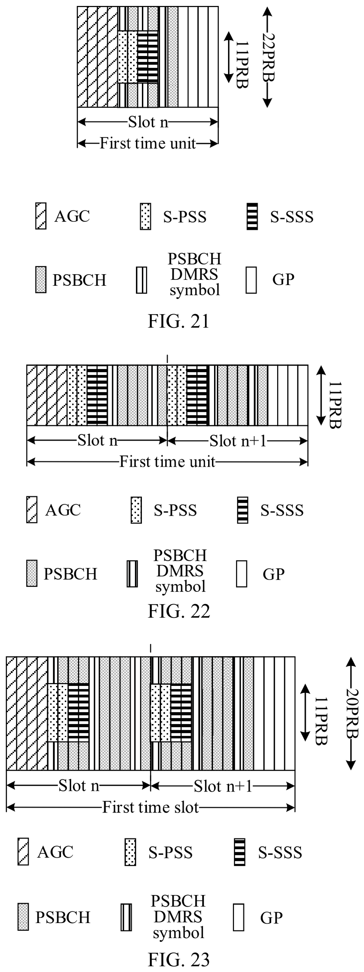

In some embodiments, one first time unit includes one S-SSB, and its transmission resources include 6 time domain symbols, of which 2 time domain symbols only transmit the PSBCH, and some PRBs in 4 time domain symbols for transmitting the S-PSS/S-SSS are also used to transmit the PSBCH. The first sub-information indicates that an interval between the first PSBCH DMRS symbol and the first time domain symbol of the S-SSB is 0. The second sub-information indicates that an interval between two adjacent PSBCH DMRS symbols is 2, and the position of the PSBCH DMRS time domain symbol may be as illustrated in FIG. 21.

In some embodiments, one first time unit includes 2 S-SSBs, and transmission resources of one S-SSB include 10 time domain symbols, of which 6 time domain symbols only transmit the PSBCH, and 4 time domain symbols for transmitting the S-PSS/S-SSS do not transmit the PSBCH. The first sub-information indicates that the interval between the first PSBCH DMRS symbol and the first time domain symbol of the S-SSB is 4, and the second sub-information indicates that the interval between the two adjacent PSBCH DMRS symbols is 4. The position of the PSBCH DMRS time domain symbol may be as illustrated in FIG. 22.

In some embodiments, one first time unit includes 2 S-SSBs, and transmission resources of one S-SSB include 10 time domain symbols, of which 6 time domain symbols only transmit the PSBCH, and some PRBs in 4 symbols for transmitting the S-PSS/S-SSS are also used to transmit the PSBCH. The first sub-information indicates that the interval between the first PSBCH DMRS symbol and the first time domain symbol of the S-SSB is 0, and the second sub-information indicates that the interval between the two adjacent PSBCH DMRS symbols is 4. The position of the PSBCH DMRS time domain symbol may be as illustrated in FIG. 23.

In some embodiments, one time domain symbol occupied by the first S-SSB includes the PSBCH DMRS. In this case, for each PRB for PSBCH transmission, one subcarrier of every G subcarriers in the PRB is used to carry the PSBCH DMRS; where G is a positive integer. Optionally, G=1 or G=2. That is, if G=1, all subcarriers on the time domain symbol carry the DMRS. If G=2, the interval between the adjacent DMRS subcarriers in the time domain symbol is 2. For example, the DMRS is mapped to even-numbered subcarriers.

In some embodiments, a value of G is determined based on at least one of: protocol predefined information, sidelink BWP configuration information, or resource pool configuration information.

In some embodiments, the first S-SSB transmitted in the first time unit occupies A1 time domain symbols and B1 PRBs (corresponding to 12·B1 subcarriers). An S-PSS in the first S-SSB occupies 1 time domain symbol and B2 PRBs (corresponding to 12·B2 subcarriers), and/or an S-SSS in the first S-SSB occupies 1 time domain symbol and B2 PRBs (corresponding to 12·B2 subcarriers). The first S-SSB is any S-SSB transmitted in the first time unit, A1, B1 and B2 are all positive integers, and B1≥B2.

Specifically, the S-PSS and S-SSS involved in this embodiment are respectively PSS and SSS structures based on the NR system.

In some embodiments, the first time domain symbol available for the S-SSB transmission is a next time domain symbol of the last AGC symbol in the first time unit.

In some embodiments, in a case where the number of slots M included in the first time unit varies, the first time unit may correspond to different S-SSB structures.

In some embodiments, a value of A1 is determined based on at least one of: protocol predefined information, sidelink BWP configuration information, or resource pool configuration information; and/or, a value of B1 is determined based on at least one of: protocol predefined information, sidelink BWP configuration information, or resource pool configuration information; and/or, a value of B2 is determined based on at least one of: protocol predefined information, sidelink BWP configuration information, or resource pool configuration information.

In some embodiments, part of subcarriers in the B2 PRBs are used to transmit the S-PSS, and/or part of subcarriers in the B2 PRBs are used to transmit the S-SSS.

In some embodiments, remaining time domain symbols in the A1 time domain symbols occupied by the first S-SSB, except for the 1 time domain symbol occupied by the S-PSS and the 1 time domain symbol occupied by the S-SSS, are available for mapping the PSBCH.

In some embodiments, in a case of B2<B1, on the 1 time domain symbol occupied by the S-PSS and the 1 time domain symbol occupied by the S-SSS in the first S-SSB, remaining B1-B2 PRBs are available for mapping the PSBCH.

In some embodiments, a time domain symbol occupied by the S-SSS is located after a time domain symbol occupied by the S-PSS in the first S-SSB.

In some embodiments, a gap between the time domain symbol occupied by the S-SSS and the time domain symbol occupied by the S-PSS in the first S-SSB is C time domain symbol(s), where C is an integer greater than or equal to 0. That is, the gap between the S-PSS and the S-SSS is the C time domain symbol(s). Optionally, a value of C is determined based on at least one of: protocol predefined information, sidelink BWP configuration information, or resource pool configuration information.

In some embodiments, the S-PSS in the first S-SSB is mapped starting from a D-th time domain symbol available for first S-SSB transmission, where D is an integer greater than or equal to 1. That is, the S-PSS is mapped starting from the D-th symbol available for S-SSB transmission. Optionally, a value of D is determined based on at least one of: protocol predefined information, sidelink BWP configuration information, or resource pool configuration information.

In some embodiments, in a case of B2<B1, the S-PSS and the S-SSS in the first S-SSB are located in middle B2 PRBs of the first S-SSB, or a frequency domain starting position of each of the S-PSS and S-SSS in the first S-SSB is the same as a starting position of the first S-SSB, or a frequency domain ending position of each of the S-PSS and the S-SSS in the first S-SSB is the same as a frequency domain ending position of the first S-SSB.

In some embodiments, if (B1-B2) is a multiple of 2, the B2 PRBs occupied by each of the S-PSS and the S-SSS in the first S-SSB correspond to B2 PRBs in a middle of the B1 PRBs.

In some embodiments, if (B1-B2) is not a multiple of 2, a gap between the frequency domain starting position of each of the S-PSS and the S-SSS in the first S-SSB and the frequency domain starting position of the S-SSB is ((B1-B2-1)/2) PRBs, and a gap between the frequency domain ending position of each of the S-PSS and the S-SSS in the first S-SSB and the frequency domain ending position of the first S-SSB is ((B1-B2+1)/2) PRBs.

In some embodiments, if (B1-B2) is not a multiple of 2, the gap between the frequency domain starting position of each of the S-PSS and the S-SSS in the first S-SSB and the frequency domain starting position of the first S-SSB is floor ((B1-B2)/2) PRBs, and the gap between the frequency domain ending position of each of the S-PSS and the S-SSS in the first S-SSB and the frequency domain ending position of the first S-SSB is floor ((B1-B2)/2)+1 or ceil ((B1-B2)/2) PRBs.

In some embodiments, if (B1-B2) is not a multiple of 2, the gap between the frequency domain starting position of each of the S-PSS and the S-SSS in the first S-SSB and the frequency domain starting position of the first S-SSB is ((B1-B2+1)/2) PRBs, and the gap between the frequency domain ending position of each of the S-PSS and the S-SSS in the first S-SSB and the frequency domain ending position of the first S-SSB is ((B1-B2-1)/2) PRBs.

In some embodiments, if (B1-B2) is not a multiple of 2, the gap between the frequency domain starting position of each of the S-PSS and S-SSS in the first S-SSB and the frequency domain starting position of the first S-SSB is ceil ((B1-B2)/2) PRBs, and the gap between the frequency domain ending position of each of the S-PSS and the S-SSS in the first S-SSB and the frequency domain ending position of the first S-SSB is floor ((B1-B2)/2) or ceil ((B1-B2)/2)-1 PRBs.

In some embodiments, the first time unit is available for transmitting E S-SSBs, where E is a positive integer. In a case where E is greater than 1, a gap between two adjacent S-SSBs among the E S-SSBs is F time domain symbol(s), where F is an integer greater than or equal to 0.

In some embodiments, no sidelink data or sidelink signal is transmitted on the F time domain symbol(s), or the F time domain symbol(s) are guard symbol(s).

In some embodiments, within the B1 PRBs corresponding to the first S-SSB, no sidelink data or sidelink signal is transmitted on the F time domain symbol(s). Optionally, the F time domain symbol(s) are used as guard symbol(s).

In some embodiments, the E S-SSBs include a second S-SSB, and A1 time domain symbols occupied by the second S-SSB are located in different slots.

In some embodiments, a value of E is determined based on at least one of: protocol predefined information, sidelink BWP configuration information, or resource pool configuration information; and/or, a value of F is determined based on at least one of: protocol predefined information, sidelink BWP configuration information, or resource pool configuration information.

Specifically, in the high-frequency band, the terminal usually utilizes a beam-based transmission manner, different S-SSBs may be transmitted using different transmit beams. Therefore, for two adjacent S-SSBs, the transmitting side (i.e., the first terminal) needs to switch the transmit beam. Switching the transmit beam needs processing time. If the processing time is greater than the length corresponding to the CP, one or more symbols are required for beam switching, and the F time domain symbols are used for the transmitting side (i.e., the first terminal) to perform beam switching.

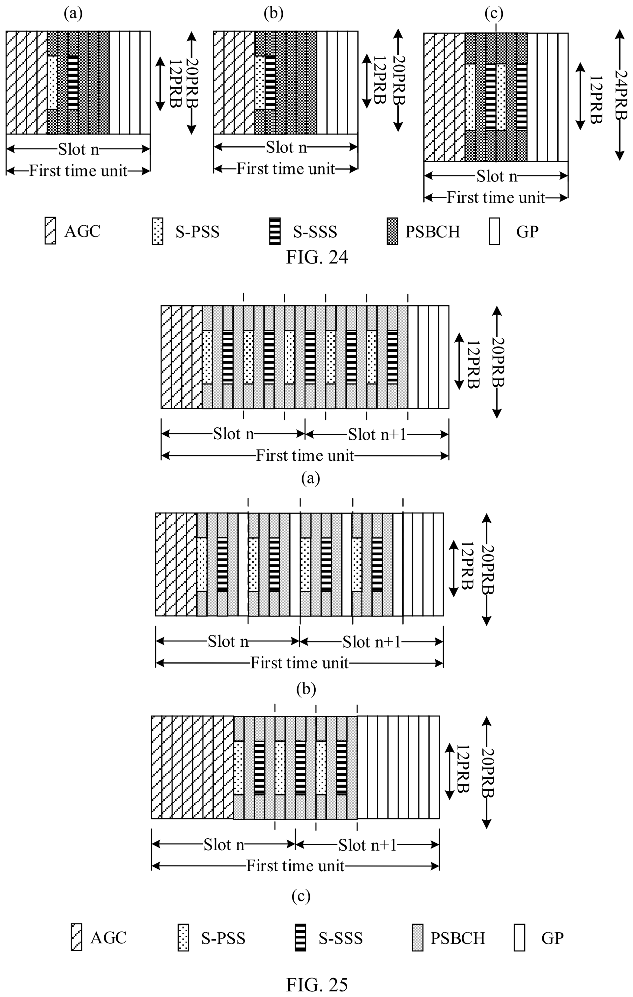

In some embodiments, as illustrated in FIG. 24, one first time unit includes one slot, i.e., M=1. The first S-SSB time domain symbol is a 5th time domain symbol in the first time unit, i.e., A=4. The first 4 time domain symbols in the first time unit may be used as AGC, and the last 4 time domain symbols in the first time unit are used as GP, i.e., B=4. The first time unit includes 6 time domain symbols available for transmitting the S-SSB.

Specifically, as illustrated in (a) of FIG. 24, one first time unit includes 1 S-SSB (i.e., E=1), and transmission resources of one S-SSB include 6 symbols (i.e., A1=6). The S-PSS is mapped starting from the first symbol available for the S-SSB transmission (i.e., D=1). The S-PSS and the S-SSS each occupy 1 time domain symbol, the gap between the S-SSS and the S-PSS is one symbol (i.e., C=1), and the remaining symbols are used to map PSBCH. The frequency domain resources of the S-SSB are 20 PRBs (i.e., B1=20). The frequency domain resources of each of the S-PSS and the S-SSS are 12 PRBs (i.e., B2=12), which are located in middle 12 PRBs of the S-SSB, and the remaining PRBs on the S-PSS and S-SSS symbols are also used to map PSBCH.

Specifically, as illustrated in (b) of FIG. 24, it is similar to (a) of FIG. 24, except for that the S-PSS and the S-SSS are adjacent in time domain, i.e., C=0 (in (a) of FIG. 24, C=1).

Specifically, as illustrated in (c) of FIG. 24, one first time unit includes 2 S-SSBs (i.e., E=2), and the two S-SSBs are adjacent in time domain (i.e., F=0). For each S-SSB, the transmission resources of one S-SSB include 3 symbols (i.e., A1=3). The S-PSS is mapped starting from the first symbol available for S-SSB transmission (i.e., D=1). The S-PSS and S-SSS each occupy 1 time domain symbol, the gap between the S-SSS and the S-PSS is one symbol (i.e., C=1), and the remaining symbols are used to map the PSBCH. The frequency domain resources of the S-SSB are 24 PRBs (i.e., B1=24). The frequency domain resources of each of the S-PSS and the S-SSS are 12 PRBs (i.e., B2=12), which are located in middle 12 PRBs of the S-SSB, and the remaining PRBs on the S-PSS and S-SSS symbols are also used to map the PSBCH.

In some embodiments, as illustrated in FIG. 25, one first time unit includes 2 slots, i.e., M=2.

Specifically, as illustrated in (a) of FIG. 25, 4 symbols in the first time unit are used as AGC, i.e., A=4, and 4 symbols are used as GP, i.e., B=4. The first time unit includes 20 time domain symbols available for transmitting the S-SSB. One first time unit includes 5 S-SSBs (i.e., E=5), and two adjacent S-SSBs are adjacent in time domain (i.e., F=0). For each S-SSB, transmission resources of one S-SSB include 4 symbols (i.e., A1=4), and the S-PSS is mapped starting from the first symbol available for S-SSB transmission (i.e., D=1). The S-PSS and the S-SSS each occupy 1 time domain symbol, the gap between the S-SSS and the S-PSS is one symbol (i.e., C=1), and the remaining symbols are used to map the PSBCH. The frequency domain resources of the S-SSB are 20 PRBs (i.e., B1=20). The frequency domain resources of each of the S-PSS and the S-SSS are 12 PRBs (i.e., B2=12), which are located in middle 12 PRBs of the S-SSB, and the remaining PRBs on the S-PSS and S-SSS symbols are also used to map the PSBCH.

Specifically, as illustrated in (b) of FIG. 25, 4 symbols in the first time unit are used as AGC, i.e., A=4, and 4 symbols are used as GP, i.e., B=4. The first time unit includes 20 time domain symbols available for transmitting S-SSB. The first time unit includes 4 S-SSBs (i.e., E=4), and the gap between two adjacent S-SSBs is one symbol (i.e., F=1). For each S-SSB, the transmission resources of one S-SSB include 4 symbols (i.e., A1=4), and the S-PSS is mapped starting from the first symbol available for the S-SSB (i.e., D=1). The S-PSS and the S-SSS each occupy 1 time domain symbol, the gap between the S-SSS and the S-PSS is one symbol (i.e., C=1), and the remaining symbols are used to map the PSBCH. The frequency domain resources of the S-SSB are 20 PRBs (i.e., B1=20). The frequency domain resources of each of the S-PSS and the S-SSS are 12 PRBs (i.e., B2=12), which are located in middle 12 PRBs of the S-SSB, and the remaining PRBs on the S-PSS and S-SSS symbols are also used to map the PSBCH.

Specifically, as illustrated in (c) of FIG. 25, 8 symbols in the first time unit are used as AGC, i.e., A=8, and 8 symbols are used as GP, i.e., B=8. The first time unit includes 20 time domain symbols available for transmitting the S-SSB. The first time unit includes 3 S-SSBs (i.e., E=3), and two adjacent S-SSBs are adjacent in time domain (i.e., F=0). For each S-SSB, transmission resources of one S-SSB include 5 symbols (i.e., A1=5), and the S-PSS is mapped starting from the first symbol available for S-SSB transmission (i.e., D=1). The S-PSS and the S-SSS each occupy 1 time domain symbol, the gap between the S-SSS and the S-PSS is one symbol (i.e., C=1), and the remaining symbols are used to map the PSBCH. The frequency domain resources of S-SSB are 20 PRBs (i.e., B1=20). The frequency domain resources of each of the S-PSS and the S-SSS are 12 PRBs (i.e., B2=12), which are located in the middle 12 PRBs of S-SSB, and the remaining PRBs on the S-PSS and S-SSS symbols are also used to map the PSBCH.

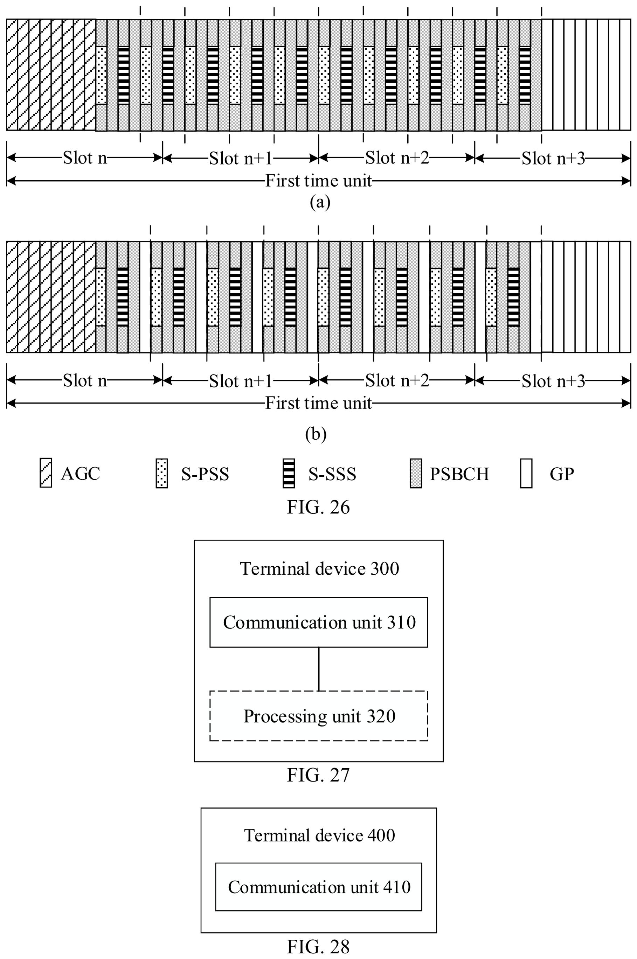

In some embodiments, as illustrated in FIG. 26, one first time unit includes 4 slots, i.e., M=4. The first S-SSB time domain symbol is the 9th time domain symbol in the first time unit, i.e., A=8. The first 8 time domain symbols in the first time unit may be used as AGC, and the last 8 time domain symbols in the first time unit are used as GP, i.e., B=8. The first time unit includes 40 time domain symbols available for transmitting the S-SSB.

Specifically, as illustrated in (a) of FIG. 26, the first time unit includes 10 S-SSBs (i.e., E=10), and two adjacent S-SSBs are adjacent in the time domain (i.e., F=0). For each S-SSB, transmission resources of one S-SSB include 4 symbols (i.e., A1=4), and the S-PSS is mapped starting from the first symbol available for S-SSB transmission (i.e., D=1). The S-PSS and the S-SSS each occupy 1 time domain symbol, the gap between the S-SSS and the S-PSS is one symbol (i.e., C=1), and the remaining symbols are used to map the PSBCH. The frequency domain resources of the S-SSB are 20 PRBs (i.e., B1=20). The frequency domain resources of each of the S-PSS and the S-SSS are 12 PRBs (i.e., B2=12), which are located in the middle 12 PRBs of the S-SSB, and the remaining PRBs in the S-PSS and S-SSS symbols are also used to map the PSBCH.

Specifically, as illustrated in (b) of FIG. 26, the first time unit includes 8 S-SSBs (i.e., E=8), and the gap between two adjacent S-SSBs is one symbol (i.e., F=1). For each S-SSB, transmission resources of one S-SSB include 4 symbols (i.e., A1=4), and the S-PSS is mapped starting from the first symbol available for S-SSB transmission (i.e., D=1). The S-PSS and the S-SSS each occupy 1 time domain symbol, the gap between the S-SSS and the S-PSS is one symbol (i.e., C=1), and the remaining symbols are used to map the PSBCH. The frequency domain resources of the S-SSB are 20 PRBs (i.e., B1=20). The frequency domain resources of each of the S-PSS and the S-SSS are 12 PRBs (i.e., B2=12), which are located in the middle 12 PRBs of the S-SSB, and the remaining PRBs in the S-PSS and S-SSS symbols are also used to map the PSBCH.

In some embodiments, resources of the PSBCH on the same time domain symbols as the S-PSS and/or the S-SSS in the A1 time domain symbols occupied by the first S-SSB include a PSBCH DMRS; or, a first time domain symbol on which only the PSBCH is transmitted in the A1 time domain symbols occupied by the first S-SSB includes the PSBCH DMRS; or, time domain symbol on which only the PSBCH is transmitted in the A1 time domain symbols occupied by the first S-SSB includes the PSBCH DMRS; or, all time domain symbols for transmitting the PSBCH in the A1 time domain symbols occupied by the first S-SSB include the PSBCH DMRS.

For example, only the resources of the PSBCH on the same symbols as the S-PSS and/or the S-SSS include the PSBCH DMRS. That is, only the resources of the PSBCH on the same symbols as the S-PSS include the PSBCH DMRS; or, only the resources of the PSBCH on the same symbols as the S-SSS include the PSBCH DMRS; or, only the resources of the PSBCH on the same symbols as the S-PSS and the S-SSS include the PSBCH DMRS. For example, only the resources of PSBCH on the same symbols as the S-PSS and S-SSS include the PSBCH DMRS. For example, in FIG. 25 or 26, one S-SSB includes 4 symbols, and the S-PSS and S-SSS are respectively located on the first and third symbols of the S-SSB. That is, only PSBCH transmission resources on the two symbols include the PSBCH DMRS. Since the two symbols include the S-PSS and the S-SSS, when the receiving terminal may detect the S-PSS and the S-SSS, the synchronization signal may be used for channel estimation. Combined with the PSBCH DMRS on the symbols, channel estimation for all PRBs on the symbols may be achieved.

For example, only the first symbol that only transmits the PSBCH (without transmitting the S-PSS and the S-SSS) includes the PSBCH DMRS. For example, in FIG. 25 or 26, one S-SSB includes 4 symbols, and the first symbol that only transmits the PSBCH is the second symbol in the S-SSB. That is, the PSBCH DMRS is transmitted only in PSBCH transmission resources of this symbol.

For example, symbols on which only the PSBCH is transmitted (without transmitting the S-PSS and S-SSS) include the PSBCH DMRS. For example, in FIG. 25 or 26, one S-SSB includes 4 symbols, and the second and fourth symbols are used to only transmit the PSBCH. Therefore, only PSBCH transmission resources on these two symbols include the PSBCH DMRS, while PSBCH transmission resources on the first and third symbols do not include DMRS.

For example, all symbols for transmitting the PSBCH include the PSBCH DMRS. For example, in FIG. 25 or 26, one S-SSB includes 4 symbols, and the PSBCH is transmitted on the 4 symbols. Therefore, the PSBCH transmission resources on these 4 symbols include the PSBCH DMRS.

In some embodiments, for one time domain symbol occupied by the first S-SSB, if the time domain symbol includes the PSBCH DMRS, one subcarrier of every G subcarriers in each PRB for PSBCH transmission is used to carry the PSBCH DMRS. G is a positive integer. Optionally, G=1 or G=2. That is, if G=1, all subcarriers on the time domain symbol carry DMRS. If G=2, an interval between adjacent DMRS subcarriers on the time domain symbol is 2. For example, the DMRS is mapped to even-numbered subcarriers.

In some embodiments, a value of G is determined based on at least one of: protocol predefined information, sidelink BWP configuration information, or resource pool configuration information.

In this embodiment, a multi-slot S-SSB structure is designed based on the 4-symbol SSB in the NR system. The number of symbols included in one S-SSB is flexibly adjusted according to the number of symbols available for the S-SSB transmission in the multiple slots, so that the SSB structure in the existing NR system may be reused as much as possible.

That is, the embodiments of the present application design the multi-slot S-SSB structure based on the S-SSB structure in the NR SL, or design the multi-slot S-SSB structure based on the SSB structure in the NR system. Any multi-slot S-SSB structure may be supported, and the PSBCH DMRS pattern design method is provided.

Therefore, in the embodiments of the present application, the slot structure based on M slots (i.e., the first time unit) is designed to transmit the S-SSB. For the subcarrier spacing of 480 kHz or 960 kHz or larger, multiple time domain symbols are supported to use as AGC and multiple time domain symbols are supported to use as GP without affecting the transmission of the S-SSB, thereby improving the system transmission efficiency of the S-SSB and optimizing the scheme of S-SSB transmission.

The method embodiments of the present application are described above in detail with reference to FIGS. 15 to 26, and device embodiments of the present application are described in detail with reference to FIGS. 27 to 31. It should be understood that the device embodiments and the method embodiments correspond to each other, and similar descriptions may refer to the method embodiments.

FIG. 27 is a schematic block diagram of a terminal device 300 according to the embodiments of the present application. The terminal device 300 is a first terminal. As illustrated in FIG. 27, the terminal device 300 includes:

a communication unit 310, configured to transmit an S-SSB on time domain symbols available for transmitting the S-SSB in a first time unit;
where the first time unit includes M slots, a first time domain symbol available for transmitting the S-SSB in the first time unit is an (A+1)-th time domain symbol, and last B time domain symbols in the first time unit are used as guard symbols, where M, A and B are all positive integers, and M≥1, A> 1, B>1; and
the S-SSB transmitted in the first time unit includes a sidelink primary synchronization signal (S-PSS), a sidelink secondary synchronization signal (S-SSS) and a physical sidelink broadcast channel (PSBCH).

In some embodiments, in a case of M>1, the M slots are consecutive physical slots, or the M slots are consecutive slots available for sidelink transmission.

In some embodiments, information carried on first A time domain symbols in the first time unit is a repetition of information carried on the (A+1)-th time domain symbol; or the information carried on the first A time domain symbols in the first time unit is a repetition of information carried on the (A+1)-th time domain symbol to a 2A-th time domain symbol; or the information carried on the first A time domain symbols in the first time unit includes a repetition of information carried on an S-PSS time domain symbol and/or a repetition of information carried on an S-SSS time domain symbol.

In some embodiments, a value of A is determined based on at least one of: protocol predefined information, sidelink BWP configuration information, or resource pool configuration information.

In some embodiments, the sidelink BWP configuration information or the resource pool configuration information includes first indication information, where the first indication information is used to indicate the value of A; or

the sidelink BWP configuration information or the resource pool configuration information includes second indication information, where the second indication information is used to indicate a position of a first time domain symbol of a physical sidelink shared channel (PSSCH), a physical sidelink control channel (PSCCH), the PSBCH, the S-PSS or the S-SSB, and the value of A is determined based on content indicated by the second indication information; or the sidelink BWP configuration information or the resource pool configuration information includes third indication information and fourth indication information, where the third indication information is used to indicate the position of the first time domain symbol of the PSSCH, the PSCCH, the PSBCH, the S-PSS or the S-SSB, and the fourth indication information is used to indicate a position of a first time domain symbol available for sidelink transmission, and the value of A is determined based on content indicated by the third indication information and content indicated by the fourth indication information.

In some embodiments, the value of A is determined based on a first sidelink subcarrier spacing and a second sidelink subcarrier spacing; and

the first sidelink subcarrier spacing is determined based on sidelink BWP configuration information, and the second sidelink subcarrier spacing is determined based on protocol predefined information, pre-configuration information or network configuration information.

In some embodiments, a value of B is determined based on at least one of: protocol predefined information, sidelink BWP configuration information, or resource pool configuration information.

In some embodiments, the sidelink BWP configuration information or the resource pool configuration information includes fifth indication information, where the fifth indication information is used to indicate the value of B; or

the sidelink BWP configuration information or the resource pool configuration information includes sixth indication information and seventh indication information, where the sixth indication information is used to indicate a position of a first time domain symbol available for sidelink transmission, and the seventh indication information is used to indicate a length or number of time domain symbols available for the sidelink transmission; or, the sixth indication information is used to indicate a position of a first time domain symbol available for S-SSB transmission, and the seventh indication information is used to indicate a length or number of time domain symbols available for the S-SSB transmission; and the value of B is determined based on content indicated by the sixth indication information and content indicated by the seventh indication information; or

the sidelink BWP configuration information or the resource pool configuration information includes eighth indication information, where the eighth indication information is used to indicate the length or number of time domain symbols available for the sidelink transmission, or the eighth indication information is used to indicate the length or number of time domain symbols available for the S-SSB transmission; and the value of B is determined based on content indicated by the eighth indication information; or

the sidelink BWP configuration information or the resource pool configuration information includes ninth indication information and tenth indication information, where the ninth indication information is used to indicate the length or number of time domain symbols available for the sidelink transmission, or the ninth indication information is used to indicate the length or number of time domain symbols available for the S-SSB transmission, and the tenth indication information is used to indicate a number of slots included in the first time unit, and the value of B is determined based on content indicated by the ninth indication information and content indicated by the tenth indication information.

In some embodiments, the value of B is determined based on the first sidelink subcarrier spacing and the second sidelink subcarrier spacing;

where the first sidelink subcarrier spacing is determined based on sidelink BWP configuration information, and the second sidelink subcarrier spacing is determined based on protocol predefined information, pre-configuration information or network configuration information.

In some embodiments, the second sidelink subcarrier spacing is a reference subcarrier spacing.

In some embodiments, the second sidelink subcarrier spacing is 120 kHz, 60 kHz, 30 kHz, or 15 kHz.

In some embodiments, a first S-SSB transmitted in the first time unit occupies A1 time domain symbols and B1 physical resource blocks (PRBs);

where an S-PSS in the first S-SSB occupies 2 adjacent time domain symbols and B2 PRBs, and/or an S-SSS in the first S-SSB occupies 2 adjacent time domain symbols and B2 PRBs; and

the first S-SSB is any S-SSB transmitted in the first time unit, and A1, B1 and B2 are all positive integers, and B1$\geq$B2.

In some embodiments, sequences corresponding to the S-PSS on the 2 adjacent time domain symbols are the same, and/or sequences corresponding to the S-SSS on the 2 adjacent time domain symbols are the same.

In some embodiments, part of subcarriers in the B2 PRBs are used to transmit the S-PSS, and/or part of subcarriers in the B2 PRBs are used to transmit the S-SSS.

In some embodiments, remaining time domain symbols in the A1 time domain symbols occupied by the first S-SSB, except for the 2 time domain symbols occupied by the S-PSS and the 2 time domain symbols occupied by the S-SSS, are available for mapping the PSBCH.

In some embodiments, in a case of B2<B1, on the 2 time domain symbols occupied by the S-PSS and the 2 time domain symbols occupied by the S-SSS in the first S-SSB, remaining (B1-B2) PRBs are available for mapping the PSBCH.

In some embodiments, the terminal device 300 further includes:

a processing unit 320, which is configured to determine a demodulation reference signal (DMRS) pattern of the PSBCH according to first information;

where the first information includes first sub-information and/or second sub-information, the first sub-information is used to determine a position of a first PSBCH DMRS time domain symbol, and the second sub-information is used to determine a symbol interval between two adjacent PSBCH DMRS symbols.

In some embodiments, the first sub-information includes at least one of:
a time domain offset of the first PSBCH DMRS time domain symbol relative to a first time domain symbol corresponding to transmission resources of the first S-SSB, a time domain offset of the first PSBCH DMRS time domain symbol relative to a first time domain symbol that only transmits the PSBCH in the transmission resources of the first S-SSB, time domain symbol index information or time domain position information of the first PSBCH DMRS time domain symbol in the A1 time domain symbols that are included in the transmission resources of the first S-SSB, a time domain offset of the first PSBCH DMRS time domain symbol relative to the first time domain symbol available for transmitting the S-SSB in the first time unit, time domain symbol index information or time domain position information of the first PSBCH DMRS time domain symbol in the first time unit, or a time domain offset of the first PSBCH DMRS time domain symbol relative to a first time domain symbol in the first time unit or a first sidelink time domain symbol in the first time unit.

In some embodiments, a value of the second sub-information is a subset of a set {2, 4, 8, 12, 16, 20, 24, 32, 40}.

In some embodiments, the first sub-information is protocol predefined information, or the first sub-information belongs to sidelink BWP configuration information, or the first sub-information is determined based on the sidelink BWP configuration information, or the first sub-information belongs to resource pool configuration information, or the first sub-information is determined based on the resource pool configuration information; and/or

the second sub-information is protocol predefined information, or the second sub-information belongs to sidelink BWP configuration information, or the second sub-information is determined based on the sidelink BWP configuration information, or the second sub-information belongs to resource pool configuration information, or the second sub-information is determined based on the resource pool configuration information.

In some embodiments, time domain symbols for transmitting a PSBCH DMRS in the A1 time domain symbols occupied by the first S-SSB includes one of:

a first time domain symbol for transmitting the S-PSS;
a second time domain symbol for transmitting the S-PSS;
the first time domain symbol for transmitting the S-PSS and a first time domain symbol for transmitting the S-SSS;
the first time domain symbol for transmitting the S-PSS and a second time domain symbol for transmitting the S-SSS; or
each time domain symbol for transmitting the S-PSS and/or each time domain symbol for transmitting the S-SSS.

In some embodiments, the first S-SSB transmitted in the first time unit occupies A1 time domain symbols and B1 PRBs;

where an S-PSS in the first S-SSB occupies 1 time domain symbol and B2 PRBs, and/or, an S-SSS in the first S-SSB occupies 1 time domain symbol and B2 PRBs; and
the first S-SSB is any S-SSB transmitted in the first time unit, A1, B1 and B2 are all positive integers, and B1≥B2.

In some embodiments, part of subcarriers in the B2 PRBs are used to transmit the S-PSS, and/or part of subcarriers in the B2 PRBs are used to transmit the S-SSS.

In some embodiments, remaining time domain symbols in the A1 time domain symbols occupied by the first S-SSB, except for the 1 time domain symbol occupied by the S-PSS and the 1 time domain symbol occupied by the S-SSS, are available for mapping the PSBCH.

In some embodiments, in a case of B2<B1, on the 1 time domain symbol occupied by the S-PSS and the 1 time domain symbol occupied by the S-SSS in the first S-SSB, remaining (B1-B2) PRBs are available for mapping the PSBCH.

In some embodiments, resources of the PSBCH on the same time domain symbols as the S-PSS and/or the S-SSS in the A1 time domain symbols occupied by the first S-SSB include a PSBCH DMRS; or, a first time domain symbol on which only the PSBCH is transmitted in the A1 time domain symbols occupied by the first S-SSB includes the PSBCH DMRS; or, time domain symbols on which only the PSBCH is transmitted in the A1 time domain symbols occupied by the first S-SSB includes the PSBCH DMRS; or, all time domain symbols for transmitting the PSBCH in the A1 time domain symbols occupied by the first S-SSB include the PSBCH DMRS.

In some embodiments, for one time domain symbol occupied by the first S-SSB, in a case where the time domain symbol includes a PSBCH DMRS, one subcarrier of every G subcarriers in each PRB for PSBCH transmission is used to carry the PSBCH DMRS;
where G is a positive integer.

In some embodiments, G=1 or G=2.

In some embodiments, a value of G is determined based on at least one of: protocol predefined information, sidelink BWP configuration information, or resource pool configuration information.

In some embodiments, a time domain symbol occupied by the S-SSS in the first S-SSB is located after a time domain symbol occupied by the S-PSS in the first S-SSB.

In some embodiments, a gap between the time domain symbol occupied by the S-SSS and the time domain symbol occupied by the S-PSS in the first S-SSB is C time domain symbol(s), where C is an integer greater than or equal to 0.

In some embodiments, a value of C is determined based on at least one of: protocol predefined information, sidelink BWP configuration information, or resource pool configuration information.

In some embodiments, the S-PSS in the first S-SSB is mapped starting from a D-th time domain symbol available for first S-SSB transmission, where D is an integer greater than or equal to 1.

In some embodiments, a value of D is determined based on at least one of: protocol predefined information, sidelink BWP configuration information, or resource pool configuration information.

In some embodiments, in a case of B2<B1, the S-PSS and the S-SSS in the first S-SSB are located in middle B2 PRBs of the first S-SSB, or a frequency domain starting position of each of the S-PSS and the S-SSS in the first S-SSB is the same as a starting position of the first S-SSB, or a frequency domain ending position of each of the S-PSS and the S-SSS in the first S-SSB is the same as a frequency domain ending position of the first S-SSB.

In some embodiments, in a case where (B1-B2) is a multiple of 2, the B2 PRBs occupied by each of the S-PSS and the S-SSS in the first S-SSB correspond to B2 PRBs in a middle of the B1 PRBs; and/or

in a case where (B1-B2) is not a multiple of 2, a gap between the frequency domain starting position of each of the S-PSS and the S-SSS in the first S-SSB and the frequency domain starting position of the first S-SSB is ((B1-B2-1)/2) PRBs, and a gap between the frequency domain ending position of each of the S-PSS and the S-SSS in the first S-SSB and the frequency domain ending position of the first S-SSB is ((B1-B2+1)/2) PRBs; or, in the case where (B1-B2) is not a multiple of 2, the gap between the frequency domain starting position of each of the S-PSS and the S-SSS in the first S-SSB and the frequency domain starting position of the first S-SSB is ((B1-B2+1)/2) PRBs, and the gap between the frequency domain ending position of each of the S-PSS and the S-SSS in the first S-SSB and the frequency domain ending position of the first S-SSB is ((B1-B2-1)/2) PRBs.

In some embodiments, a value of A1 is determined based on at least one of: protocol predefined information, sidelink BWP configuration information, or resource pool configuration information; and/or, a value of B1 is determined based on at least one of: protocol predefined information, sidelink BWP configuration information, or resource pool configuration information; and/or, a value of B2 is determined based on at least one of: protocol predefined information, sidelink BWP configuration information, or resource pool configuration information.

In some embodiments, the first time unit is available for transmitting E S-SSBs, where E is a positive integer. In a case where E is greater than 1, a gap between two adjacent S-SSBs among the E S-SSBs is F time domain symbol(s), where F is an integer greater than or equal to 0.

In some embodiments, no sidelink data or sidelink signal is transmitted on the F time domain symbol(s), or the F time domain symbol(s) are guard symbol(s).

In some embodiments, the E S-SSBs include a second S-SSB, and A1 time domain symbols occupied by the second S-SSB are located in different slots.

In some embodiments, a value of E is determined based on at least one of: protocol predefined information, sidelink BWP configuration information, or resource pool configuration information; and/or, a value of F is determined based on at least one of: protocol predefined information, sidelink BWP configuration information, or resource pool configuration information.

In some embodiments, the communication unit may be a communication interface or a transceiver, or an input/output interface of a communication chip or a system on chip. The processing unit may be one or more processors.

It should be understood that the terminal device 300 according to the embodiments of the present application may correspond to the first terminal in the method embodiments of the present application, and the above and other operations and/or functions of various units in the terminal device 300 are for implementing the corresponding processes of the first terminal in the method 200 illustrated in FIG. 15, which will not be repeated here for the sake of brevity.

FIG. 28 is a schematic block diagram of a terminal device 400 according to the embodiments of the present application. The terminal device 400 is a second terminal. As illustrated in FIG. 28, the terminal device 400 includes:

a communication unit 410, configured to receive an S-SSB transmitted by a first terminal on time domain symbols available for transmitting the S-SSB in a first time unit;

where the first time unit includes M slots, a first time domain symbol available for transmitting the S-SSB in the first time unit is an (A+1)-th time domain symbol, and last B time domain symbols in the first time unit are used as guard symbols, where M, A and B are all positive integers, and M≥1, A>1, B> 1; and

the S-SSB transmitted in the first time unit includes a sidelink primary synchronization signal (S-PSS), a sidelink secondary synchronization signal (S-SSS) and a physical sidelink broadcast channel (PSBCH).

In some embodiments, in a case of M>1, the M slots are consecutive physical slots, or the M slots are consecutive slots available for sidelink transmission.

In some embodiments, information carried on first A time domain symbols in the first time unit is a repetition of information carried on the (A+1)-th time domain symbol; or the information carried on the first A time domain symbols in the first time unit is a repetition of information carried on the (A+1)-th time domain symbol to a 2A-th time domain symbol; or the information carried on the first A time domain symbols in the first time unit includes a repetition of information carried on an S-PSS time domain symbol and/or a repetition of information carried on an S-SSS time domain symbol.

In some embodiments, a value of A is determined based on at least one of: protocol predefined information, sidelink BWP configuration information, or resource pool configuration information.

In some embodiments, the sidelink BWP configuration information or the resource pool configuration information includes first indication information, where the first indication information is used to indicate the value of A; or

the sidelink BWP configuration information or the resource pool configuration information includes second indication information, where the second indication information is used to indicate a position of a first time domain symbol of a PSSCH, a PSCCH, the PSBCH, the S-PSS or the S-SSB, and the value of A is determined based on content indicated by the second indication information; or

the sidelink BWP configuration information or the resource pool configuration information includes third indication information and fourth indication information, where the third indication information is used to indicate the position of the first time domain symbol of the PSSCH, the PSCCH, the PSBCH, the S-PSS or the S-SSB, and the fourth indication information is used to indicate a position of a first time domain symbol available for sidelink transmission, and the value of A is determined based on content indicated by the third indication information and content indicated by the fourth indication information.

In some embodiments, the value of A is determined based on a first sidelink subcarrier spacing and a second sidelink subcarrier spacing; and

the first sidelink subcarrier spacing is determined based on sidelink BWP configuration information, and the second sidelink subcarrier spacing is determined based on protocol predefined information, pre-configuration information or network configuration information.

In some embodiments, a value of B is determined based on at least one of: protocol predefined information, sidelink BWP configuration information, or resource pool configuration information.

In some embodiments, the sidelink BWP configuration information or the resource pool configuration information includes fifth indication information, where the fifth indication information is used to indicate the value of B; or

the sidelink BWP configuration information or the resource pool configuration information includes sixth indication information and seventh indication information; where the sixth indication information is used to indicate a position of a first time domain symbol available for sidelink transmission, and the seventh indication information is used to indicate a length or number of time domain symbols available for the sidelink transmission; or, the sixth indication information is used to indicate a position of a first time domain symbol available for S-SSB transmission, and the seventh indication information is used to indicate a length or number of time domain symbols available for the S-SSB transmission; and the value of B is determined based on content indicated by the sixth indication information and content indicated by the seventh indication information; or

the sidelink BWP configuration information or the resource pool configuration information includes eighth indication information, where the eighth indication information is used to indicate the length or number of time domain symbols available for the sidelink transmission, or the eighth indication information is used to indicate the length or number of time domain symbols available for the S-SSB transmission; and the value of B is determined based on content indicated by the eighth indication information; or

the sidelink BWP configuration information or the resource pool configuration information includes ninth indication information and tenth indication information, where the ninth indication information is used to indicate the length or number of time domain symbols available for the sidelink transmission, or the ninth indication information is used to indicate the length or number of time domain symbols available for the S-SSB transmission, and the tenth indication information is used to indicate a number of slots included in the first time unit, and the value of B is determined based on content indicated by the ninth indication information and content indicated by the tenth indication information.

In some embodiments, the value of B is determined based on a first sidelink subcarrier spacing and a second sidelink subcarrier spacing; where the first sidelink subcarrier spacing is determined based on sidelink BWP configuration information, and the second sidelink subcarrier spacing is determined based on protocol predefined information, pre-configuration information or network configuration information.

In some embodiments, the second sidelink subcarrier spacing is a reference subcarrier spacing.

**EP 4 679 906 A1**

In some embodiments, the second sidelink subcarrier spacing is 120 kHz, 60 kHz, 30 kHz, or 15 kHz.

In some embodiments, a first S-SSB transmitted in the first time unit occupies A1 time domain symbols and B1 PRBs; where an S-PSS in the first S-SSB occupies 2 adjacent time domain symbols and B2 PRBs, and/or an S-SSS in the first S-SSB occupies 2 adjacent time domain symbols and B2 PRBs; and the first S-SSB is any S-SSB transmitted in the first time unit, and A1, B1 and B2 are all positive integers, and B1≥B2.

In some embodiments, sequences corresponding to the S-PSS on the 2 adjacent time domain symbols are the same, and/or sequences corresponding to the S-SSS on the 2 adjacent time domain symbols are the same.

In some embodiments, part of subcarriers in the B2 PRBs are used to transmit the S-PSS, and/or part of subcarriers in the B2 PRBs are used to transmit the S-SSS.

In some embodiments, remaining time domain symbols in the A1 time domain symbols occupied by the first S-SSB, except for the 2 time domain symbols occupied by the S-PSS and the 2 time domain symbols occupied by the S-SSS, are available for mapping the PSBCH.

In some embodiments, in a case of B2<B1, on the 2 time domain symbols occupied by the S-PSS and the 2 time domain symbols occupied by the S-SSS in the first S-SSB, remaining (B1-B2) PRBs are available for mapping the PSBCH.

In some embodiments, a demodulation reference signal (DMRS) pattern of the PSBCH is determined based on first information; where the first information includes first sub-information and/or second sub-information, the first sub-information is used to determine a position of a first PSBCH DMRS time domain symbol, and the second sub-information is used to determine a symbol interval between two adjacent PSBCH DMRS symbols.

In some embodiments, the first sub-information includes at least one of: a time domain offset of the first PSBCH DMRS time domain symbol relative to a first time domain symbol corresponding to transmission resources of the first S-SSB, a time domain offset of the first PSBCH DMRS time domain symbol relative to a first time domain symbol that only transmits the PSBCH in the transmission resources of the first S-SSB, time domain symbol index information or time domain position information of the first PSBCH DMRS time domain symbol in the A1 time domain symbols that are included in the transmission resources of the first S-SSB, a time domain offset of the first PSBCH DMRS time domain symbol relative to the first time domain symbol available for transmitting the S-SSB in the first time unit, time domain symbol index information or time domain position information of the first PSBCH DMRS time domain symbol in the first time unit, or a time domain offset of the first PSBCH DMRS time domain symbol relative to a first time domain symbol in the first time unit or a first sidelink time domain symbol in the first time unit.

In some embodiments, a value of the second sub-information is a subset of a set {2, 4, 8, 12, 16, 20, 24, 32, 40}.

In some embodiments, the first sub-information is protocol predefined information, or the first sub-information belongs to sidelink BWP configuration information, or the first sub-information is determined based on the sidelink BWP configuration information, or the first sub-information belongs to resource pool configuration information, or the first sub-information is determined based on the resource pool configuration information; and/or

the second sub-information is protocol predefined information, or the second sub-information belongs to sidelink BWP configuration information, or the second sub-information is determined based on the sidelink BWP configuration information, or the second sub-information belongs to resource pool configuration information, or the second sub-information is determined based on the resource pool configuration information.

In some embodiments, time domain symbols for transmitting a PSBCH DMRS in the A1 time domain symbols occupied by the first S-SSB includes one of:

a first time domain symbol for transmitting the S-PSS;
a second time domain symbol for transmitting the S-PSS;
the first time domain symbol for transmitting the S-PSS and a first time domain symbol for transmitting the S-SSS;
the first time domain symbol for transmitting the S-PSS and a second time domain symbol for transmitting the S-SSS; or
each time domain symbol for transmitting the S-PSS and/or each time domain symbol for transmitting the S-SSS.

In some embodiments, the first S-SSB transmitted in the first time unit occupies A1 time domain symbols and B1 PRBs; where an S-PSS in the first S-SSB occupies 1 time domain symbol and B2 PRBs, and/or, an S-SSS in the first S-SSB occupies 1 time domain symbol and B2 PRBs; and the first S-SSB is any S-SSB transmitted in the first time unit, and A1, B1 and B2 are all positive integers, and B1≥B2.

In some embodiments, part of subcarriers in the B2 PRBs are used to transmit the S-PSS, and/or part of subcarriers in the B2 PRBs are used to transmit the S-SSS.

In some embodiments, remaining time domain symbols in the A1 time domain symbols occupied by the first S-SSB, except for the 1 time domain symbol occupied by the S-PSS and the 1 time domain symbol occupied by the S-SSS, are available for mapping the PSBCH.

In some embodiments, in a case of B2<B1, on the 1 time domain symbol occupied by the S-PSS and the 1 time domain symbol occupied by the S-SSS in the first S-SSB, remaining (B1-B2) PRBs are available for mapping the PSBCH.

In some embodiments, the resources of the PSBCH on the same time domain symbols as the S-PSS and/or the S-SSS in the A1 time domain symbols occupied by the first S-SSB include a PSBCH DMRS; or, a first time domain symbol on which only the PSBCH is transmitted in the A1 time domain symbols occupied by the first S-SSB includes the PSBCH DMRS; or, the time domain symbol on which only the PSBCH is transmitted in the A1 time domain symbols occupied by the first S-SSB includes PSBCH DMRS; or, all time domain symbols for transmitting the PSBCH in the A1 time domain symbols occupied by the first S-SSB include PSBCH DMRS.

In some embodiments, for one time domain symbol occupied by the first S-SSB, in a case where the time domain symbol includes PSBCH DMRS, one subcarrier of every G subcarriers in each PRB for PSBCH transmission is used to carry the PSBCH DMRS; where G is a positive integer.

In some embodiments, G=1 or G=2.

In some embodiments, a value of G is determined based on at least one of: protocol predefined information, sidelink BWP configuration information, or resource pool configuration information.

In some embodiments, a time domain symbol occupied by the S-SSS in the first S-SSB is located after a time domain symbol occupied by the S-PSS in the first S-SSB.

In some embodiments, a gap between the time domain symbol occupied by the S-SSS and the time domain symbol occupied by the S-PSS in the first S-SSB is C time domain symbol(s), where C is an integer greater than or equal to 0.

In some embodiments, a value of C is determined based on at least one of: protocol predefined information, sidelink BWP configuration information, or resource pool configuration information.

In some embodiments, the S-PSS in the first S-SSB is mapped starting from a D-th time domain symbol available for first S-SSB transmission, where D is an integer greater than or equal to 1.

In some embodiments, a value of D is determined based on at least one of: protocol predefined information, sidelink BWP configuration information, or resource pool configuration information.

In some embodiments, in a case of B2<B1, the S-PSS and the S-SSS in the first S-SSB are located in middle B2 PRBs of the first S-SSB, or a frequency domain starting position of each of the S-PSS and the S-SSS in the first S-SSB is the same as a starting position of the first S-SSB, or a frequency domain ending position of each of the S-PSS and the S-SSS in the first S-SSB is the same as a frequency domain ending position of the first S-SSB.

In some embodiments, in a case where (B1-B2) is a multiple of 2, the B2 PRBs occupied by each of the S-PSS and the S-SSS in the first S-SSB correspond to B2 PRBs in a middle of the B1 PRBs; and/or in a case where (B1-B2) is not a multiple of 2, a gap between the frequency domain starting position of each of the S-PSS and the S-SSS in the first S-SSB and the frequency domain starting position of the first S-SSB is ((B1-B2-1)/2) PRBs, and a gap between the frequency domain ending position of each of the S-PSS and the S-SSS in the first S-SSB and the frequency domain ending position of the first S-SSB is ((B1-B2+1)/2) PRBs; or, in the case where (B1-B2) is not a multiple of 2, the gap between the frequency domain starting position of each of the S-PSS and the S-SSS in the first S-SSB and the frequency domain starting position of the first S-SSB is ((B1-B2+1)/2) PRBs, and the gap between the frequency domain ending position of each of the S-PSS and the S-SSS in the first S-SSB and the frequency domain ending position of the first S-SSB is ((B1-B2-1)/2) PRBs.

In some embodiments, a value of A1 is determined based on at least one of: protocol predefined information, sidelink BWP configuration information, or resource pool configuration information; and/or a value of B1 is determined based on at least one of: protocol predefined information, sidelink BWP configuration information, or resource pool configuration information; and/or, a value of B2 is determined based on at least one of: protocol predefined information, sidelink BWP configuration information, or resource pool configuration information.

In some embodiments, the first time unit is available for transmitting E S-SSBs, where E is a positive integer; in a case where E is greater than 1, a gap between two adjacent S-SSBs among the E S-SSBs is F time domain symbol(s), where F is an integer greater than or equal to 0.

In some embodiments, no sidelink data or sidelink signal is transmitted on the F time domain symbol(s), or the F time domain symbol(s) are guard symbol(s).

In some embodiments, the E S-SSBs include a second S-SSB, and A1 time domain symbols occupied by the second S-SSB are located in different slots.

In some embodiments, a value of E is determined based on at least one of: protocol predefined information, sidelink BWP configuration information, or resource pool configuration information; and/or, a value of F is determined based on at least one of: protocol predefined information, sidelink BWP configuration information, or resource pool configuration information.

In some embodiments, the communication unit may be a communication interface or a transceiver, or an input/output interface of a communication chip or a system on chip. The processing unit may be one or more processors.

It should be understood that the terminal device 400 according to the embodiments of the present application may correspond to the second terminal in the method embodiments of the present application, and the above and other operations and/or functions of various units in the terminal device 400 are for implementing the corresponding process of the second terminal in the method 200 illustrated in FIG. 15, which will not be repeated here for the sake of brevity.

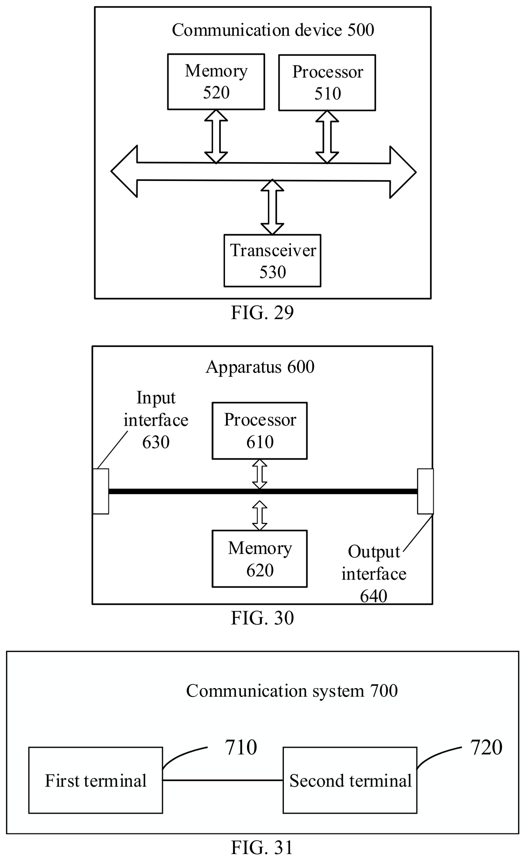

FIG. 29 is a schematic structural diagram of a communication device 500 provided by the embodiments of the present application. The communication device 500 illustrated in FIG. 29 includes a processor 510, which may call a computer program from a memory and run the computer program to implement the method in the embodiments of the present application.

In some embodiments, as illustrated in FIG. 29, the communication device 500 may further include a memory 520. The processor 510 may call a computer program from the memory 520 and run the computer program to implement the method in the embodiments of the present application.

The memory 520 may be a separate device independent of the processor 510, or may be integrated into the processor 510.

In some embodiments, as illustrated in FIG. 29, the communication device 500 may further include a transceiver 530, and the processor 510 may control the transceiver 530 to communicate with other devices, specifically, may transmit information or data to other devices, or receive information or data transmitted by other devices.

The transceiver 530 may include a transmitter and a receiver. The transceiver 530 may further include antenna(s), and the number of the antennas may be one or more.

In some embodiments, the processor 510 may implement the functions of the processing unit in the terminal device, which will not be repeated here for the sake of brevity.

In some embodiments, the transceiver 530 may implement the functions of the communication unit in the terminal device, which will not be repeated here for the sake of brevity.

In some embodiments, the communication device 500 may specifically be the terminal device in the embodiments of the present application, and the communication device 500 may implement the corresponding processes implemented by the first terminal or the second terminal in various methods of the embodiments of the present application, which will not be repeated here for the sake of brevity.

FIG. 30 is a schematic structural diagram of an apparatus of the embodiments of the present application. A apparatus 600 illustrated in FIG. 30 includes a processor 610, which may call a computer program from a memory and run the computer program to implement the method in the embodiments of the present application.

In some embodiments, as illustrated in FIG. 30, the apparatus 600 may further include a memory 620. The processor 610 may call a computer program from the memory 620 and run the computer program to implement the method in the embodiments of the present application.

The memory 620 may be a separate device independent of the processor 610, or may be integrated into the processor 610.

In some embodiments, the processor 610 may implement the functions of the processing unit in the terminal device, which will not be repeated here for the sake of brevity.

In some embodiments, the apparatus 600 may further include an input interface 630. The processor 610 may control the input interface 630 to communicate with other devices or chips, and specifically, may obtain information or data transmitted by other devices or chips. Optionally, the processor 610 may be located on a chip or off a chip.

In some embodiments, the input interface 630 may implement the functions of the communication unit in the terminal device.

In some embodiments, the apparatus 600 may further include an output interface 640. The processor 610 may control the output interface 640 to communicate with other devices or chips, and specifically, may output information or data to other devices or chips. Optionally, the processor 610 may be located on a chip or off a chip.

In some embodiments, the output interface 640 may implement the functions of the communication unit in the terminal device.

In some embodiments, the apparatus may be applied to the terminal device in the embodiments of the present application, and the apparatus may implement the corresponding processes implemented by the first terminal or the second terminal in various methods of the embodiments of the present application, which will be repeated here for the sake of brevity.

In some embodiments, the apparatus mentioned in the embodiments of the present application may also be a chip, for example, may be a system level chip, a system-on-chip, a chip system, or a system-on-chip chip.

FIG. 31 is a schematic block diagram of a communication system 700 provided by the embodiments of the present application. As illustrated in FIG. 31, the communication system 700 includes a first terminal 710 and a second terminal 720.

The first terminal 710 may be configured to implement the corresponding functions implemented by the first terminal in the above method, and the second terminal 720 may be configured to implement the corresponding functions implemented by the second terminal in the above method, which will not be repeated here for the sake of brevity.

It should be understood that the processor in the embodiments of the present application may be an integrated circuit chip and have a processing capability of signals. In the implementation process, various steps of the above method embodiments may be completed by an integrated logic circuit of hardware in the processor or an instruction in a software form. The above processor may be a general-purpose processor, a digital signal processor (DSP), an application specific integrated circuit (ASIC), a field programmable gate array (FPGA) or other programmable logic devices, a discrete gate or transistor logic device, a discrete hardware component. Various methods, steps and logical block diagrams disclosed in the embodiments of the present application may be implemented or performed. A general-purpose processor may be a microprocessor, or the processor may also be any conventional processor, etc. The steps of the method disclosed in combination with the embodiments of the present application may be directly embodied as being performed and completed by a hardware decoding processor, or by using a combination of hardware and software modules in the decoding processor. The software module may be located in the mature storage medium in the art such as the random memory, the flash memory, the read-only memory, the programmable read-only memory or electrically erasable programmable memory, the register. The storage medium is located in the memory, and the processor reads the information in the memory and completes the steps of the above methods in combination with its hardware.

It may be understood that the memory in the embodiments of the present application may be a volatile memory or a non-volatile memory, or may include both volatile and non-volatile memories. Herein, the non-volatile memory may be a read-only memory (ROM), a programmable ROM (PROM), an erasable PROM (EPROM), an electrically EPROM (EEPROM) or a flash memory. The volatile memory may be a random access memory (RAM), which is used as an external cache. Through illustrative, rather than limiting illustration, many forms of RAMs are available, for example, a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM) and a direct rambus RAM (DR RAM). It should be noted that the memory of the system and the method described herein is intended to include, but not limited to, these and any other suitable types of memories.

It should be understood that the above memory is exemplary but not limiting illustration, e.g., the memory in embodiments of the present application may also be a SRA, a DRAM, an SDRAM, a DDR SDRAM, an ESDRAM, an SLDRAM, or a DR RAM. That is, the memory in the embodiments of the present application is intended to include, but not limited to, these and any other suitable types of memories.

The embodiments of the present application further provide a computer-readable storage medium for storing a computer program.

In some embodiments, the computer-readable storage medium may be applied to the terminal device in the embodiments of the present application, and the computer program causes the computer to perform the corresponding processes implemented by the first terminal in the various methods of the embodiments of the present application, which will not be repeated here for the sake of brevity.

In some embodiments, the computer-readable storage medium may be applied to the terminal device in the embodiments of the present application, and the computer program causes the computer to perform the corresponding processes implemented by the second terminal in the various methods of the embodiments of the present application, which will not be repeated here for the sake of brevity.

The embodiments of the present application further provide a computer program product, including computer program instructions.

In some embodiments, the computer program product may be applied to the terminal device in the embodiments of the present application, and the computer program instructions cause the computer to perform the corresponding processes implemented by the first terminal in the various methods of the embodiments of the present application, which will not be repeated here for the sake of brevity.

In some embodiments, the computer program product may be applied to the terminal device in the embodiments of the present application, and the computer program instructions cause the computer to perform the corresponding processes implemented by the second terminal in the various methods of the embodiments of the present application, which will not be repeated here for the sake of brevity.

The embodiments of the present application further provide a computer program.

In some embodiments, the computer program may be applied to the terminal device in the embodiments of the present application. When executed on the computer, the computer program causes the computer to perform the corresponding processes implemented by the first terminal in the various methods of the embodiments of the present application, which will not be repeated here for the sake of brevity.

In some embodiments, the computer program may be applied to the terminal device in the embodiments of the present application. When executed on the computer, the computer program causes the computer to perform the corresponding processes implemented by the second terminal in the various methods of the embodiments of the present application, which will not be repeated here for the sake of brevity.

Those ordinary skilled in the art may realize that, units and algorithm steps of the examples described in combination with the embodiments disclosed herein can be implemented in electronic hardware or in a combination of computer software and electronic hardware. Whether these functions are performed by way of hardware or software depends on a specific application and a design constraint of the technical solution. A skilled person may use different methods for each specific application, to implement the described functions, but such implementation should not be considered beyond the scope of the present application.

It may be clearly understood by those skilled in the art that, for convenience and brevity of the description, the specific working procedures of the system, the apparatus and the unit described above may refer to the corresponding procedures in the above method embodiments, which will not be repeated here.

In the several embodiments provided by the application, it should be understood that, the disclosed systems, apparatus, and method may be implemented in other ways. For example, the apparatus embodiments described above are only schematic, for example, division of the units is only division of logical functions, and there may be other division methods in an actual implementation, for example, a plurality of units or components may be combined or integrated into another system, or some features may be ignored or not performed. On the other hand, the coupling or direct coupling or communicative connection between each other as shown or discussed may be indirect coupling or communicative connection of apparatus or units via some interfaces, which may be electrical, mechanical, or in other forms.

The units illustrated as separate components may be or may not be physically separated, and the components shown as units may be or may not be physical units, that is, they may be located in one place, or may be distributed onto a plurality of network units. A part or all of the units may be selected according to actual needs, to implement the purpose of the schemes of the embodiments.

In addition, the various functional units in the various embodiments of the present application may be integrated into one processing unit, or the various units may exist physically separately, or two or more units may be integrated into one unit.

If the described functions are implemented in a form of a software functional unit and sold or used as an independent product, they may be stored in a computer readable storage medium. Based on this understanding, the technical solution of the present application essentially, or a part of the technical solution that contributes to the prior art, or a part of the technical solution, may be embodied in a form of a software product, and the computer software product is stored in a storage medium, and includes a plurality of instructions for enabling a computer device (which may be a personal computer, a server, or a network device, etc.) to perform all or some of steps of the methods described in the various embodiments of the present application. And, the storage medium mentioned above includes a USB flash drive (U disk), a mobile hard disk, an ROM, an RAM, a diskette, or an optical disk, and various mediums that may store program codes.

The above content is only specific implementations of the present application, but the protection scope of the present application is not limited thereto, and any skilled familiar with this technical field may easily think of changes or substitutions within the technical scope disclosed in the present application, which should be all covered within the protection scope of the present application. Therefore, the protection scope of the present application should be subject to the protection scope of the claims.

## Claims

1. A wireless communication method, comprising:

   transmitting, by a first terminal, a sidelink synchronization signal block (S-SSB) on time domain symbols available for transmitting the S-SSB in a first time unit;
   wherein the first time unit comprises M slots, a first time domain symbol available for transmitting the S-SSB in the first time unit is an $(A+1)$-th time domain symbol, and last B time domain symbols in the first time unit are used as guard symbols, M, A and B being all positive integers, and $M \geq 1$, $A > 1$, $B > 1$; and
   the S-SSB transmitted in the first time unit comprises a sidelink primary synchronization signal (S-PSS), a sidelink secondary synchronization signal (S-SSS) and a physical sidelink broadcast channel (PSBCH).

2. The method according to claim 1, wherein in a case of $M>1$, the M slots are consecutive physical slots, or the M slots are consecutive slots available for sidelink transmission.

3. The method according to claim 1 or 2, wherein information carried on first A time domain symbols in the first time unit is a repetition of information carried on the $(A+1)$-th time domain symbol; or the information carried on the first A time domain symbols in the first time unit is a repetition of information carried on the $(A+1)$-th time domain symbol to a $2A$-th time domain symbol; or the information carried on the first A time domain symbols in the first time unit comprises a repetition of information carried on an S-PSS time domain symbol and/or a repetition of information carried on an S-SSS time domain symbol.

4. The method according to any one of claims 1 to 3, wherein a value of A is determined based on at least one of: protocol predefined information, sidelink bandwidth part (BWP) configuration information, or resource pool configuration information.

5. The method according to claim 4, wherein the sidelink BWP configuration information or the resource pool configuration information comprises first indication information, wherein the first indication information is used to indicate the value of A; or

the sidelink BWP configuration information or the resource pool configuration information comprises second indication information, wherein the second indication information is used to indicate a position of a first time domain symbol of a physical sidelink shared channel (PSSCH), a physical sidelink control channel (PSCCH), the PSBCH, the S-PSS or the S-SSB, and the value of A is determined based on content indicated by the second indication information; or

the sidelink BWP configuration information or the resource pool configuration information comprises third indication information and fourth indication information, wherein the third indication information is used to indicate the position of the first time domain symbol of the PSSCH, the PSCCH, the PSBCH, the S-PSS or the S-SSB, and the fourth indication information is used to indicate a position of a first time domain symbol available for sidelink transmission, and the value of A is determined based on content indicated by the third indication information and content indicated by the fourth indication information.

6. The method according to any one of claims 1 to 3, wherein a value of A is determined based on a first sidelink subcarrier spacing and a second sidelink subcarrier spacing; and

the first sidelink subcarrier spacing is determined based on sidelink BWP configuration information, and the second sidelink subcarrier spacing is determined based on protocol predefined information, pre-configuration information or network configuration information.

7. The method according to any one of claims 1 to 6, wherein a value of B is determined based on at least one of: protocol predefined information, sidelink BWP configuration information, or resource pool configuration information.

8. The method according to claim 7, wherein the sidelink BWP configuration information or the resource pool configuration information comprises fifth indication information, wherein the fifth indication information is used to indicate the value of B; or

the sidelink BWP configuration information or the resource pool configuration information comprises sixth indication information and seventh indication information, wherein the sixth indication information is used to indicate a position of a first time domain symbol available for sidelink transmission, and the seventh indication information is used to indicate a length or number of time domain symbols available for sidelink transmission; or

the sixth indication information is used to indicate a position of a first time domain symbol available for S-SSB transmission, and the seventh indication information is used to indicate a length or number of time domain symbols available for S-SSB transmission; and the value of B is determined based on content indicated by the sixth indication information and content indicated by the seventh indication information; or

the sidelink BWP configuration information or the resource pool configuration information comprises eighth indication information, wherein the eighth indication information is used to indicate the length or number of time domain symbols available for sidelink transmission, or the eighth indication information is used to indicate the length or number of time domain symbols available for S-SSB transmission; and the value of B is determined based on content indicated by the eighth indication information; or

the sidelink BWP configuration information or the resource pool configuration information comprises ninth indication information and tenth indication information, wherein the ninth indication information is used to indicate the length or number of time domain symbols available for sidelink transmission, or the ninth indication information is used to indicate the length or number of time domain symbols available for S-SSB transmission, and the tenth indication information is used to indicate a number of slots comprised in the first time unit, and the value of B is determined based on content indicated by the ninth indication information and content indicated by the tenth indication information.

9. The method according to any one of claims 1 to 6, wherein a value of B is determined based on a first sidelink subcarrier spacing and a second sidelink subcarrier spacing;

wherein the first sidelink subcarrier spacing is determined based on sidelink BWP configuration information, and the second sidelink subcarrier spacing is determined based on protocol predefined information, pre-configuration information or network configuration information.

10. The method according to claim 6 or 9, wherein the second sidelink subcarrier spacing is a reference subcarrier spacing.

11. The method according to claim 6, 9 or 10, wherein the second sidelink subcarrier spacing is 120 kHz, 60 kHz, 30 kHz or 15 kHz.

12. The method according to any one of claims 1 to 11, wherein a first S-SSB transmitted in the first time unit occupies A1 time domain symbols and B1 physical resource blocks (PRBs);

> wherein an S-PSS in the first S-SSB occupies 2 adjacent time domain symbols and B2 PRBs, and/or an S-SSS in the first S-SSB occupies 2 adjacent time domain symbols and B2 PRBs; and
> the first S-SSB is any S-SSB transmitted in the first time unit, A1, B1 and B2 being all positive integers, and B1≥B2.

13. The method according to claim 12, wherein sequences corresponding to the S-PSS on the 2 adjacent time domain symbols are the same, and/or sequences corresponding to the S-SSS on the 2 adjacent time domain symbols are the same.

14. The method according to claim 12 or 13, wherein part of subcarriers in the B2 PRBs are used to transmit the S-PSS, and/or part of subcarriers in the B2 PRBs are used to transmit the S-SSS.

15. The method according to any one of claims 12 to 14, wherein remaining time domain symbols in the A1 time domain symbols occupied by the first S-SSB, except for the 2 time domain symbols occupied by the S-PSS and the 2 time domain symbols occupied by the S-SSS, are available for mapping the PSBCH.

16. The method according to any one of claims 12 to 15, wherein in a case of B2<B1, on the 2 time domain symbols occupied by the S-PSS and the 2 time domain symbols occupied by the S-SSS in the first S-SSB, remaining (B1-B2) PRBs are available for mapping the PSBCH.

17. The method according to claim 15 or 16, further comprising:

> determining, by the first terminal, a demodulation reference signal (DMRS) pattern of the PSBCH according to first information;
> wherein the first information comprises first sub-information and/or second sub-information, the first sub-information is used to determine a position of a first PSBCH DMRS time domain symbol, and the second sub-information is used to determine a symbol interval between two adjacent PSBCH DMRS symbols.

18. The method according to claim 17, wherein the first sub-information comprises at least one of:
a time domain offset of the first PSBCH DMRS time domain symbol relative to a first time domain symbol corresponding to transmission resources of the first S-SSB, a time domain offset of the first PSBCH DMRS time domain symbol relative to a first time domain symbol that only transmits the PSBCH in the transmission resources of the first S-SSB, time domain symbol index information or time domain position information of the first PSBCH DMRS time domain symbol in the A1 time domain symbols that are comprised in the transmission resources of the first S-SSB, a time domain offset of the first PSBCH DMRS time domain symbol relative to the first time domain symbol available for transmitting the S-SSB in the first time unit, time domain symbol index information or time domain position information of the first PSBCH DMRS time domain symbol in the first time unit, or a time domain offset of the first PSBCH DMRS time domain symbol relative to a first time domain symbol in the first time unit or a first sidelink time domain symbol in the first time unit.

19. The method according to claim 17, wherein a value of the second sub-information is a subset of a set {2, 4, 8, 12, 16, 20, 24, 32, 40}.

20. The method according to any one of claims 17 to 19, wherein the first sub-information is protocol predefined information, or the first sub-information belongs to sidelink BWP configuration information, or the first sub-information is determined based on the sidelink BWP configuration information, or the first sub-information belongs to resource pool configuration information, or the first sub-information is determined based on the resource pool configuration information; and/or
the second sub-information is protocol predefined information, or the second sub-information belongs to sidelink BWP configuration information, or the second sub-information is determined based on the sidelink BWP configuration information, or the second sub-information belongs to resource pool configuration information, or the second sub-information is determined based on the resource pool configuration information.

21. The method according to any one of claims 12 to 20, wherein time domain symbols for transmitting a PSBCH DMRS in the A1 time domain symbols occupied by the first S-SSB comprises one of:

a first time domain symbol for transmitting the S-PSS;
a second time domain symbol for transmitting the S-PSS;
the first time domain symbol for transmitting the S-PSS and a first time domain symbol for transmitting the S-SSS;
the first time domain symbol for transmitting the S-PSS and a second time domain symbol for transmitting the S-SSS; or
each time domain symbol for transmitting the S-PSS and/or each time domain symbol for transmitting the S-SSS.

22. The method according to any one of claims 1 to 11, wherein a first S-SSB transmitted in the first time unit occupies A1 time domain symbols and B1 PRBs;

wherein an S-PSS in the first S-SSB occupies 1 time domain symbol and B2 PRBs, and/or an S-SSS in the first S-SSB occupies 1 time domain symbol and B2 PRBs; and
the first S-SSB is any S-SSB transmitted in the first time unit, A1, B1 and B2 being all positive integers, and $B1 \geq B2$.

23. The method according to claim 22, wherein part of subcarriers in the B2 PRBs are used to transmit the S-PSS, and/or part of subcarriers in the B2 PRBs are used to transmit the S-SSS.

24. The method according to claim 22 or 23, wherein remaining time domain symbols in the A1 time domain symbols occupied by the first S-SSB, except for the 1 time domain symbol occupied by the S-PSS and the 1 time domain symbol occupied by the S-SSS, are available for mapping the PSBCH.

25. The method according to any one of claims 22 to 24, wherein in a case of B2<B1, on the 1 time domain symbol occupied by the S-PSS and the 1 time domain symbol occupied by the S-SSS in the first S-SSB, remaining (B1-B2) PRBs are available for mapping the PSBCH.

26. The method according to claim 24 or 25, wherein resources of the PSBCH on same time domain symbols as the S-PSS and/or the S-SSS in the A1 time domain symbols occupied by the first S-SSB comprise a PSBCH DMRS; or, a first time domain symbol on which only the PSBCH is transmitted in the A1 time domain symbols occupied by the first S-SSB comprises the PSBCH DMRS; or, time domain symbols on which only the PSBCH is transmitted in the A1 time domain symbols occupied by the first S-SSB comprise the PSBCH DMRS; or, all time domain symbols for transmitting the PSBCH in the A1 time domain symbols occupied by the first S-SSB comprise the PSBCH DMRS.

27. The method according to any one of claims 12 to 26, wherein

for one time domain symbol occupied by the first S-SSB, in a case where the time domain symbol comprises a PSBCH DMRS, one subcarrier of every G subcarriers in each PRB for PSBCH transmission is used to carry the PSBCH DMRS;
wherein G is a positive integer.

28. The method according to claim 27, wherein G=1 or G=2.

29. The method according to claim 27 or 28, wherein a value of G is determined based on at least one of: protocol predefined information, sidelink BWP configuration information, or resource pool configuration information.

30. The method according to any one of claims 12 to 29, wherein a time domain symbol occupied by the S-SSS in the first S-SSB is located after a time domain symbol occupied by the S-PSS in the first S-SSB.

31. The method according to claim 30, wherein a gap between the time domain symbol occupied by the S-SSS and the time domain symbol occupied by the S-PSS in the first S-SSB is C time domain symbol(s), C being an integer greater than or equal to 0.

**32.** The method according to claim 31, wherein a value of C is determined based on at least one of: protocol predefined information, sidelink BWP configuration information, or resource pool configuration information.

**33.** The method according to any one of claims 12 to 32, wherein the S-PSS in the first S-SSB is mapped starting from a D-th time domain symbol available for first S-SSB transmission, wherein D is an integer greater than or equal to 1.

**34.** The method according to claim 33, wherein a value of D is determined based on at least one of: protocol predefined information, sidelink BWP configuration information, or resource pool configuration information.

**35.** The method according to any one of claims 12 to 34, wherein in a case of B2<B1, the S-PSS and the S-SSS in the first S-SSB are located in middle B2 PRBs of the first S-SSB, or a frequency domain starting position of each of the S-PSS and the S-SSS in the first S-SSB is the same as a frequency starting position of the first S-SSB, or a frequency domain ending position of each of the S-PSS and the S-SSS in the first S-SSB is the same as a frequency domain ending position of the first S-SSB.

**36.** The method according to claim 35, wherein in a case where (B1-B2) is a multiple of 2, the B2 PRBs occupied by each of the S-PSS and the S-SSS in the first S-SSB correspond to B2 PRBs in a middle of the B1 PRBs; and/or
in a case where (B1-B2) is not a multiple of 2, a gap between the frequency domain starting position of each of the S-PSS and the S-SSS in the first S-SSB and the frequency domain starting position of the first S-SSB is ((B1-B2-1)/2) PRBs, and a gap between the frequency domain ending position of each of the S-PSS and the S-SSS in the first S-SSB and the frequency domain ending position of the first S-SSB is ((B1-B2+1)/2) PRBs; or in the case where (B1-B2) is not a multiple of 2, the gap between the frequency domain starting position of each of the S-PSS and the S-SSS in the first S-SSB and the frequency domain starting position of the first S-SSB is ((B1-B2+1)/2) PRBs, and the gap between the frequency domain ending position of each of the S-PSS and the S-SSS in the first S-SSB and the frequency domain ending position of the first S-SSB is ((B1-B2-1)/2) PRBs.

**37.** The method according to any one of claims 12 to 36, wherein a value of A1 is determined based on at least one of: protocol predefined information, sidelink BWP configuration information, or resource pool configuration information; and/or a value of B1 is determined based on at least one of: protocol predefined information, sidelink BWP configuration information, or resource pool configuration information; and/or a value of B2 is determined based on at least one of: protocol predefined information, sidelink BWP configuration information, or resource pool configuration information.

**38.** The method according to any one of claims 1 to 37, wherein the first time unit is available for transmitting E S-SSBs, E being a positive integer, wherein in a case where E is greater than 1, a gap between two adjacent S-SSBs among the E S-SSBs is F time domain symbol(s), F being an integer greater than or equal to 0.

**39.** The method according to claim 38, wherein no sidelink data or sidelink signal is transmitted on the F time domain symbol(s), or the F time domain symbol(s) are guard symbol(s).

**40.** The method according to claim 38 or 39, wherein the E S-SSBs comprise a second S-SSB, and A1 time domain symbols occupied by the second S-SSB are located in different slots.

**41.** The method according to any one of claims 38 to 40, wherein a value of E is determined based on at least one of: protocol predefined information, sidelink BWP configuration information, or resource pool configuration information; and/or, a value of F is determined based on at least one of: protocol predefined information, sidelink BWP configuration information, or resource pool configuration information.

**42.** A wireless communication method, comprising:

receiving, by a second terminal, a sidelink synchronization signal block (S-SSB) transmitted by a first terminal on time domain symbols available for transmitting the S-SSB in a first time unit, wherein
the first time unit comprises M slots, a first time domain symbol available for transmitting the S-SSB in the first time unit is an (A+1)-th time domain symbol, and last B time domain symbols in the first time unit are used as guard symbols, M, A and B being all positive integers, and M≥1, A> 1, B> 1; and
the S-SSB transmitted in the first time unit comprises a sidelink primary synchronization signal (S-PSS), a sidelink secondary synchronization signal (S-SSS) and a physical sidelink broadcast channel (PSBCH).

43. The method according to claim 42, wherein in a case of M>1, the M slots are consecutive physical slots, or the M slots are consecutive slots available for sidelink transmission.

44. The method according to claim 42 or 43, wherein information carried on first A time domain symbols in the first time unit is a repetition of information carried on the (A+1)-th time domain symbol; or the information carried on the first A time domain symbols in the first time unit is a repetition of information carried on the (A+1)-th time domain symbol to a 2A-th time domain symbol; or the information carried on the first A time domain symbols in the first time unit comprises a repetition of information carried on an S-PSS time domain symbol and/or a repetition of information carried on an S-SSS time domain symbol.

45. The method according to any one of claims 42 to 44, wherein a value of A is determined based on at least one of: protocol predefined information, sidelink bandwidth part (BWP) configuration information, or resource pool configuration information.

46. The method according to claim 45, wherein the sidelink BWP configuration information or the resource pool configuration information comprises first indication information, wherein the first indication information is used to indicate the value of A; or

   the sidelink BWP configuration information or the resource pool configuration information comprises second indication information, wherein the second indication information is used to indicate a position of a first time domain symbol of a physical sidelink shared channel (PSSCH), a physical sidelink control channel (PSCCH), the PSBCH, the S-PSS or the S-SSB, and the value of A is determined based on content indicated by the second indication information; or
   the sidelink BWP configuration information or the resource pool configuration information comprises third indication information and fourth indication information, wherein the third indication information is used to indicate the position of the first time domain symbol of the PSSCH, the PSCCH, the PSBCH, the S-PSS or the S-SSB, and the fourth indication information is used to indicate a position of a first time domain symbol available for sidelink transmission, and the value of A is determined based on content indicated by the third indication information and content indicated by the fourth indication information.

47. The method according to any one of claims 42 to 44, wherein a value of A is determined based on a first sidelink subcarrier spacing and a second sidelink subcarrier spacing; and
   the first sidelink subcarrier spacing is determined based on sidelink BWP configuration information, and the second sidelink subcarrier spacing is determined based on protocol predefined information, pre-configuration information or network configuration information.

48. The method according to any one of claims 42 to 47, wherein a value of B is determined based on at least one of: protocol predefined information, sidelink BWP configuration information, or resource pool configuration information.

49. The method according to claim 48, wherein the sidelink BWP configuration information or the resource pool configuration information comprises fifth indication information, wherein the fifth indication information is used to indicate the value of B; or

   the sidelink BWP configuration information or the resource pool configuration information comprises sixth indication information and seventh indication information, wherein the sixth indication information is used to indicate a position of a first time domain symbol available for sidelink transmission, and the seventh indication information is used to indicate a length or number of time domain symbols available for sidelink transmission; or, the sixth indication information is used to indicate a position of a first time domain symbol available for S-SSB transmission, and the seventh indication information is used to indicate a length or number of time domain symbols available for S-SSB transmission; and the value of B is determined based on content indicated by the sixth indication information and content indicated by the seventh indication information; or
   the sidelink BWP configuration information or the resource pool configuration information comprises eighth indication information, wherein the eighth indication information is used to indicate the length or number of time domain symbols available for sidelink transmission, or the eighth indication information is used to indicate the length or number of time domain symbols available for S-SSB transmission; and the value of B is determined based on content indicated by the eighth indication information; or
   the sidelink BWP configuration information or the resource pool configuration information comprises ninth indication information and tenth indication information, wherein the ninth indication information is used to indicate the length or number of time domain symbols available for sidelink transmission, or the ninth indication information is used to indicate the length or number of time domain symbols available for S-SSB transmission, and the tenth indication information is used to indicate a number of slots comprised in the first time unit, and the value of B is determined based on content indicated by the ninth indication information and content indicated by the tenth indication information.

50. The method according to any one of claims 42 to 47, wherein a value of B is determined based on a first sidelink subcarrier spacing and a second sidelink subcarrier spacing;
wherein the first sidelink subcarrier spacing is determined based on sidelink BWP configuration information, and the second sidelink subcarrier spacing is determined based on protocol predefined information, pre-configuration information or network configuration information.

51. The method according to claim 47 or 50, wherein the second sidelink subcarrier spacing is a reference subcarrier spacing.

52. The method according to claim 47, 50 or 51, wherein the second sidelink subcarrier spacing is 120 kHz, 60 kHz, 30 kHz or 15 kHz.

53. The method according to any one of claims 42 to 52, wherein a first S-SSB transmitted in the first time unit occupies A1 time domain symbols and B1 physical resource blocks (PRBs);

wherein an S-PSS in the first S-SSB occupies 2 adjacent time domain symbols and B2 PRBs, and/or an S-SSS in the first S-SSB occupies 2 adjacent time domain symbols and B2 PRBs; and
the first S-SSB is any S-SSB transmitted in the first time unit, A1, B1 and B2 being all positive integers, and B1≥B2.

54. The method according to claim 53, wherein sequences corresponding to the S-PSS on the 2 adjacent time domain symbols are the same, and/or sequences corresponding to the S-SSS on the 2 adjacent time domain symbols are the same.

55. The method according to claim 53 or 54, wherein part of subcarriers in the B2 PRBs are used to transmit the S-PSS, and/or part of subcarriers in the B2 PRBs are used to transmit the S-SSS.

56. The method according to any one of claims 53 to 55, wherein remaining time domain symbols in the A1 time domain symbols occupied by the first S-SSB, except for the 2 time domain symbols occupied by the S-PSS and the 2 time domain symbols occupied by the S-SSS, are available for mapping the PSBCH.

57. The method according to any one of claims 53 to 56, wherein in a case of B2<B1, on the 2 time domain symbols occupied by the S-PSS and the 2 time domain symbols occupied by the S-SSS in the first S-SSB, remaining (B1-B2) PRBs are available for mapping the PSBCH.

58. The method according to claim 56 or 57, wherein a demodulation reference signal (DMRS) pattern of the PSBCH is determined based on first information; wherein
the first information comprises first sub-information and/or second sub-information, the first sub-information is used to determine a position of a first PSBCH DMRS time domain symbol, and the second sub-information is used to determine a symbol interval between two adjacent PSBCH DMRS symbols.

59. The method according to claim 58, wherein the first sub-information comprises at least one of:
a time domain offset of the first PSBCH DMRS time domain symbol relative to a first time domain symbol corresponding to transmission resources of the first S-SSB, a time domain offset of the first PSBCH DMRS time domain symbol relative to a first time domain symbol that only transmits the PSBCH in the transmission resources of the first S-SSB, time domain symbol index information or time domain position information of the first PSBCH DMRS time domain symbol in the A1 time domain symbols that are comprised in the transmission resources of the first S-SSB, a time domain offset of the first PSBCH DMRS time domain symbol relative to the first time domain symbol available for transmitting the S-SSB in the first time unit, time domain symbol index information or time domain position information of the first PSBCH DMRS time domain symbol in the first time unit, or a time domain offset of the first PSBCH DMRS time domain symbol relative to a first time domain symbol in the first time unit or a first sidelink time domain symbol in the first time unit.

60. The method according to claim 58, wherein a value of the second sub-information is a subset of a set {2, 4, 8, 12, 16, 20, 24, 32, 40}.

61. The method according to any one of claims 58 to 60, wherein the first sub-information is protocol predefined information, or the first sub-information belongs to sidelink BWP configuration information, or the first sub-information is determined based on the sidelink BWP configuration information, or the first sub-information belongs to resource pool configuration information, or the first sub-information is determined based on the resource pool configuration information; and/or
the second sub-information is protocol predefined information, or the second sub-information belongs to sidelink BWP configuration information, or the second sub-information is determined based on the sidelink BWP configuration information, or the second sub-information belongs to resource pool configuration information, or the second sub-information is determined based on the resource pool configuration information.

62. The method according to any one of claims 53 to 61, wherein time domain symbols for transmitting a PSBCH DMRS in the A1 time domain symbols occupied by the first S-SSB comprises one of:

a first time domain symbol for transmitting the S-PSS;
a second time domain symbol for transmitting the S-PSS;
the first time domain symbol for transmitting the S-PSS and a first time domain symbol for transmitting the S-SSS;
the first time domain symbol for transmitting the S-PSS and a second time domain symbol for transmitting the S-SSS; or
each time domain symbol for transmitting the S-PSS and/or each time domain symbol for transmitting the S-SSS.

63. The method according to any one of claims 42 to 52, wherein a first S-SSB transmitted in the first time unit occupies A1 time domain symbols and B1 PRBs;

wherein an S-PSS in the first S-SSB occupies 1 time domain symbol and B2 PRBs, and/or an S-SSS in the first S-SSB occupies 1 time domain symbol and B2 PRBs; and
the first S-SSB is any S-SSB transmitted in the first time unit, A1, B1 and B2 being all positive integers, and B1≥B2.

64. The method according to claim 63, wherein part of subcarriers in the B2 PRBs are used to transmit the S-PSS, and/or part of subcarriers in the B2 PRBs are used to transmit the S-SSS.

65. The method according to claim 63 or 64, wherein remaining time domain symbols in the A1 time domain symbols occupied by the first S-SSB, except for the 1 time domain symbol occupied by the S-PSS and the 1 time domain symbol occupied by the S-SSS, are available for mapping the PSBCH.

66. The method according to any one of claims 63 to 65, wherein in a case of B2<B1, on the 1 time domain symbol occupied by the S-PSS and the 1 time domain symbol occupied by the S-SSS in the first S-SSB, remaining (B1-B2) PRBs are available for mapping the PSBCH.

67. The method according to claim 65 or 66, wherein
resources of the PSBCH on same time domain symbols as the S-PSS and/or the S-SSS in the A1 time domain symbols occupied by the first S-SSB comprise a PSBCH DMRS; or, a first time domain symbol on which only the PSBCH is transmitted in the A1 time domain symbols occupied by the first S-SSB comprises the PSBCH DMRS; or, time domain symbols on which only the PSBCH is transmitted in the A1 time domain symbols occupied by the first S-SSB comprise the PSBCH DMRS; or, all time domain symbols for transmitting the PSBCH in the A1 time domain symbols occupied by the first S-SSB comprise the PSBCH DMRS.

68. The method according to any one of claims 53 to 67, wherein

for one time domain symbol occupied by the first S-SSB, in a case where the time domain symbol comprises a PSBCH DMRS, one subcarrier of every G subcarriers in each PRB for PSBCH transmission is used to carry the PSBCH DMRS;
wherein G is a positive integer.

69. The method according to claim 68, wherein G=1 or G=2.

70. The method according to claim 68 or 69, wherein a value of G is determined based on at least one of: protocol predefined information, sidelink BWP configuration information, or resource pool configuration information.

71. The method according to any one of claims 53 to 70, wherein a time domain symbol occupied by the S-SSS in the first S-SSB is located after a time domain symbol occupied by the S-PSS in the first S-SSB.

72. The method according to claim 71, wherein a gap between the time domain symbol occupied by the S-SSS and the time domain symbol occupied by the S-PSS in the first S-SSB is C time domain symbol(s), C being an integer greater than or equal to 0.

73. The method according to claim 72, wherein a value of C is determined based on at least one of: protocol predefined information, sidelink BWP configuration information, or resource pool configuration information.

74. The method according to any one of claims 53 to 73, wherein the S-PSS in the first S-SSB is mapped starting from a D-th time domain symbol available for first S-SSB transmission, wherein D is an integer greater than or equal to 1.

75. The method according to claim 74, wherein a value of D is determined based on at least one of: protocol predefined information, sidelink BWP configuration information, or resource pool configuration information.

76. The method according to any one of claims 53 to 75, wherein in a case of B2<B1, the S-PSS and the S-SSS in the first S-SSB are located in middle B2 PRBs of the first S-SSB, or a frequency domain starting position of each of the S-PSS and the S-SSS in the first S-SSB is the same as a frequency starting position of the first S-SSB, or a frequency domain ending position of each of the S-PSS and the S-SSS in the first S-SSB is the same as a frequency domain ending position of the first S-SSB.

77. The method according to claim 76, wherein in a case where (B1-B2) is a multiple of 2, the B2 PRBs occupied by each of the S-PSS and the S-SSS in the first S-SSB correspond to B2 PRBs in a middle of the B1 PRBs; and/or
in a case where (B1-B2) is not a multiple of 2, a gap between the frequency domain starting position of each of the S-PSS and the S-SSS in the first S-SSB and the frequency domain starting position of the first S-SSB is ((B1-B2-1)/2) PRBs, and a gap between the frequency domain ending position of each of the S-PSS and the S-SSS in the first S-SSB and the frequency domain ending position of the first S-SSB is ((B1-B2+1)/2) PRBs; or, in the case where (B1-B2) is not a multiple of 2, the gap between the frequency domain starting position of each of the S-PSS and the S-SSS in the first S-SSB and the frequency domain starting position of the first S-SSB is ((B1-B2+1)/2) PRBs, and the gap between the frequency domain ending position of each of the S-PSS and the S-SSS in the first S-SSB and the frequency domain ending position of the first S-SSB is ((B1-B2-1)/2) PRBs.

78. The method according to any one of claims 53 to 77, wherein a value of A1 is determined based on at least one of: protocol predefined information, sidelink BWP configuration information, or resource pool configuration information; and/or a value of B1 is determined based on at least one of: protocol predefined information, sidelink BWP configuration information, or resource pool configuration information; and/or a value of B2 is determined based on at least one of: protocol predefined information, sidelink BWP configuration information, or resource pool configuration information.

79. The method according to any one of claims 42 to 78, wherein the first time unit is available for transmitting E S-SSBs, E being a positive integer, wherein in a case where E is greater than 1, a gap between two adjacent S-SSBs among the E S-SSBs is F time domain symbol(s), F being an integer greater than or equal to 0.

80. The method according to claim 79, wherein no sidelink data or sidelink signal is transmitted on the F time domain symbol(s), or the F time domain symbol(s) are guard symbol(s).

81. The method according to claim 79 or 80, wherein the E S-SSBs comprise a second S-SSB, and A1 time domain symbols occupied by the second S-SSB are located in different slots.

82. The method according to any one of claims 79 to 81, wherein a value of E is determined based on at least one of: protocol predefined information, sidelink BWP configuration information, or resource pool configuration information; and/or, a value of F is determined based on at least one of: protocol predefined information, sidelink BWP configuration information, or resource pool configuration information.

83. A terminal device, wherein the terminal device is a first terminal, and the terminal device comprises:

a communication unit, configured to transmit a sidelink synchronization signal block (S-SSB) on time domain symbols available for transmitting the S-SSB in a first time unit, wherein
the first time unit comprises M slots, a first time domain symbol available for transmitting the S-SSB in the first time unit is an (A+1)-th time domain symbol, and last B time domain symbols in the first time unit are used as guard symbols, M, A and B being all positive integers, and M≥1, A> 1, B> 1; and
the S-SSB transmitted in the first time unit comprises a sidelink primary synchronization signal (S-PSS), a sidelink secondary synchronization signal (S-SSS) and a physical sidelink broadcast channel (PSBCH).

84. A terminal device, wherein the terminal device is a second terminal, and the terminal device comprises:

a communication unit, configured to receive a sidelink synchronization signal block (S-SSB) transmitted by a first terminal on time domain symbols available for transmitting the S-SSB in a first time unit, wherein
the first time unit comprises M slots, a first time domain symbol available for transmitting the S-SSB in the first time unit is an (A+1)-th time domain symbol, and last B time domain symbols in the first time unit are used as guard symbols, M, A and B being all positive integers, and M≥1, A>1, B> 1; and
the S-SSB transmitted in the first time unit comprises a sidelink primary synchronization signal (S-PSS), a sidelink secondary synchronization signal (S-SSS) and a physical sidelink broadcast channel (PSBCH).

85. A terminal device, comprising: a processor and a memory, wherein the memory is configured to store a computer program, and the processor is configured to call and run the computer program stored in the memory, to cause the terminal device to perform the method according to any one of claims 1 to 41.

86. A terminal device, comprising: a processor and a memory, wherein the memory is configured to store a computer program, and the processor is configured to call and run the computer program stored in the memory, to cause the terminal device to perform the method according to any one of claims 42 to 82.

87. A chip, comprising: a processor, configured to call a computer program from a memory and run the computer program, to cause a device equipped with the chip to perform the method according to any one of claims 1 to 41.

88. A chip, comprising: a processor, configured to call a computer program from a memory and run the computer program, to cause a device equipped with the chip to perform the method according to any one of claims 42 to 82.

89. A computer-readable storage medium, configured to store a computer program, wherein when the computer program is executed, the method according to any one of claims 1 to 41 is implemented.

90. A computer-readable storage medium, configured to store a computer program, wherein when the computer program is executed, the method according to any one of claims 42 to 82 is implemented.

91. A computer program product, comprising computer program instructions, wherein when the computer program instructions are executed, the method according to any one of claims 1 to 41 is implemented.

92. A computer program product, comprising computer program instructions, wherein when the computer program instructions are executed, the method according to any one of claims 42 to 82 is implemented.

93. A computer program, wherein when the computer program is executed, the method according to any one of claims 1 to 41 is implemented.

94. A computer program, wherein when the computer program is executed, the method according to any one of claims 42 to 82 is implemented.

FIG. 1

FIG. 2

FIG. 3

FIG. 4

FIG. 5

FIG. 6

FIG. 7

Communication
group

UE2

UE1

UE3

UE4

FIG. 8

UE2

UE6

UE3

UE1

UE5

UE4

FIG. 9

| AGC | | | | | PSSCH | | | | | | | | GP |
|-----|---|---|---|---|-------|---|---|---|---|---|---|---|----|
| | | PSCCH | | | | | | | | | | | |

(a)

| AGC | | | | | PSSCH | | | | | GP | PSFCH | GP |
|-----|---|---|---|---|-------|---|---|---|---|----|-------|----|
| | | PSCCH | | | | | | | | | | |

(b)

FIG. 10

FIG. 11

EP 4 679 906 A1

FIG. 12

FIG. 13

FIG. 14

**200**

```
┌─────────────────┐                           ┌─────────────────┐
│  First terminal │                           │     Second      │
│                 │                           │    terminal     │
└────────┬────────┘                           └────────┬────────┘
         │                                             │
```

S210, a first terminal transmits an S-SSB on time domain symbols available for transmitting the S-SSB in a first time unit; where the first time unit includes M slots, a first time domain symbol available for transmitting the S-SSB in the first time unit is an (A+1)-th time domain symbol, last B time domain symbols in the first time unit are used as guard symbols, M, A and B are all positive integers, M $\geq$ 1, A $>$ 1, B $>$ 1, and the S-SSB transmitted in the first time unit includes an S-PSS, an S-SSS and a PSBCH

```
         │ ──────────────────────────────────────────▶│
         │                                             │
         │                                  ┌──────────┴──────────┐
         │                                  │ S220, a second      │
         │                                  │ terminal            │
         │                                  │ receives the S-SSB  │
         │                                  │ transmitted by the  │
         │                                  │ first terminal on   │
         │                                  │ the time domain     │
         │                                  │ symbols available   │
         │                                  │ for transmitting    │
         │                                  │ the S-SSB in the    │
         │                                  │ first time unit     │
         │                                  └──────────┬──────────┘
         │                                             │
```

FIG. 15

FIG. 16

(a)　　　　　　　　(b)　　　　　　　　(c)　　　　　　　　(d)

Slot n
First time unit

Slot n
First time unit

Slot n
First time unit

Slot n
First time unit

11PRB　22PRB　　11PRB　22PRB　　11PRB　24PRB　　30PRB

▢ AGC　　▨ S-PSS　　▤ S-SSS　　▨ PSBCH　　▢ GP

## FIG. 17

11PRB

Slot n　　　Slot n+1
First time unit

(a)

20PRB
11PRB

Slot n　　　Slot n+1
First time unit

(b)

24PRB
11PRB

Slot n　　　Slot n+1
First time unit

(c)

▨ AGC　　▨ S-PSS　　▤ S-SSS　　▨ PSBCH　　▢ GP

## FIG. 18

(a)

(b)

11PRB

24PRB

11PRB

Slot n    Slot n+1

First time unit

▨ AGC    ▦ S-PSS    ▤ S-SSS    ▨ PSBCH    ☐ GP

FIG. 19

11PRB

GP

Slot n    Slot n+1    Slot n+2    Slot n+3

First time unit

(a)

20PRB

11PRB

GP

Slot n    Slot n+1    Slot n+2    Slot n+3

First time unit

(b)

24PRB

11PRB

Slot n    Slot n+1    Slot n+2    Slot n+3

First time unit

(c)

▨ AGC    ▦ S-PSS    ▤ S-SSS    ▨ PSBCH    ☐ GP

FIG. 20

AGC         S-PSS         S-SSS

PSBCH       PSBCH DMRS symbol       GP

FIG. 21

AGC         S-PSS         S-SSS

PSBCH       PSBCH DMRS symbol       GP

FIG. 22

AGC         S-PSS         S-SSS

PSBCH       PSBCH DMRS symbol       GP

FIG. 23

(a)　　　　　　　(b)　　　　　　　(c)

FIG. 24

(a)

(b)

(c)

FIG. 25

Slot n — Slot n+1 — Slot n+2 — Slot n+3

First time unit

(a)

Slot n — Slot n+1 — Slot n+2 — Slot n+3

First time unit

(b)

AGC    S-PSS    S-SSS    PSBCH    GP

FIG. 26

Terminal device 300

Communication unit 310

Processing unit 320

FIG. 27

Terminal device 400

Communication unit 410

FIG. 28

Communication device 500

Memory
520

Processor
510

Transceiver
530

FIG. 29

Apparatus 600

Input
interface
630

Processor
610

Memory
620

Output
interface
640

FIG. 30

Communication system 700

710

First terminal

720

Second terminal

FIG. 31

## INTERNATIONAL SEARCH REPORT

| | International application No. |
|---|---|
| | **PCT/CN2023/080578** |

**A. CLASSIFICATION OF SUBJECT MATTER**

H04W 72/04(2023.01)i

According to International Patent Classification (IPC) or to both national classification and IPC

**B. FIELDS SEARCHED**

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

DWPI, CNTXT, ENTXTC, ENTXT, CJFD, 3GPP: 旁路, 旁链路, 侧链路, 侧行, 时隙, 时域符号, 同步信号块, 同步块, SSS, PSS, SSB, PSBCH, sidelink, SL, slot?, AGC, GP, guard

**C. DOCUMENTS CONSIDERED TO BE RELEVANT**

| Category* | Citation of document, with indication, where appropriate, of the relevant passages | Relevant to claim No. |
|---|---|---|
| Y | CN 112399601 A (MEDIATEK SINGAPORE PTE. LTD.) 23 February 2021 (2021-02-23) description, paragraphs [0019]-[0032], and figures 2, 4A-4C, and 5A-5C | 1-94 |
| Y | US 2022201629 A1 (LG ELECTRONICS INC.) 23 June 2022 (2022-06-23) description, paragraphs [0019]-[0032], and figures 12-15 | 1-94 |
| A | CN 112567673 A (CONVIDA WIRELESS LLC) 26 March 2021 (2021-03-26) entire document | 1-94 |
| A | WO 2020029225 A1 (GUANGDONG OPPO MOBILE TELECOMMUNICATIONS CORP., LTD.) 13 February 2020 (2020-02-13) entire document | 1-94 |
| A | ERICSSON. "Physical layer structures of NR V2X" *3GPP TSG-RAN WG1 Meeting #94bis, R1-1811592*, 12 October 2018 (2018-10-12), entire document | 1-94 |

☐ Further documents are listed in the continuation of Box C.　　☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **09 October 2023** | **17 October 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/080578**

| Patent document cited in search report | | | Publication date (day/month/year) | Patent family member(s) | | | Publication date (day/month/year) |
|---|---|---|---|---|---|---|---|
| CN | 112399601 | A | 23 February 2021 | WO | 2021026885 | A1 | 18 February 2021 |
| | | | | CN | 112399376 | A | 23 February 2021 |
| | | | | US | 2021091912 | A1 | 25 March 2021 |
| | | | | US | 2021092737 | A1 | 25 March 2021 |
| US | 2022201629 | A1 | 23 June 2022 | WO | 2020226464 | A1 | 12 November 2020 |
| | | | | KR | 20210153640 | A | 17 December 2021 |
| CN | 112567673 | A | 26 March 2021 | WO | 2020033086 | A1 | 13 February 2020 |
| | | | | JP | 2021533683 | A | 02 December 2021 |
| | | | | EP | 3818655 | A1 | 12 May 2021 |
| | | | | US | 2021168574 | A1 | 03 June 2021 |
| | | | | KR | 20210042940 | A | 20 April 2021 |
| WO | 2020029225 | A1 | 13 February 2020 | TW | 202013916 | A | 01 April 2020 |
| | | | | AU | 2018435590 | A1 | 11 March 2021 |
| | | | | EP | 3826251 | A1 | 26 May 2021 |
| | | | | EP | 4243358 | A2 | 13 September 2023 |
| | | | | US | 2021167917 | A1 | 03 June 2021 |
| | | | | WO | 2020029403 | A1 | 13 February 2020 |
| | | | | JP | 2022511253 | A | 31 January 2022 |
| | | | | KR | 20210040390 | A | 13 April 2021 |
| | | | | CN | 112514339 | A | 16 March 2021 |
| | | | | CN | 112929148 | A | 08 June 2021 |